(19) Europäisches Patentamt
European Patent Office
Office européen des brevets

(11) **EP 2 975 895 A1**

(12) **EUROPEAN PATENT APPLICATION**
published in accordance with Art. 153(4) EPC

(43) Date of publication:
**20.01.2016 Bulletin 2016/03**

(21) Application number: **14764612.9**

(22) Date of filing: **03.03.2014**

(51) Int Cl.:
***H04W 72/04*** (2009.01)      ***H04J 11/00*** (2006.01)

(86) International application number:
**PCT/JP2014/055297**

(87) International publication number:
**WO 2014/141920 (18.09.2014 Gazette 2014/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.03.2013 JP 2013049796**

(71) Applicant: **Sharp Kabushiki Kaisha
Osaka-shi, Osaka 545-8522 (JP)**

(72) Inventors:
• **SHIMEZAWA, Kazuyuki
Osaka 545-8522 (JP)**

• **NOGAMI, Toshizo
Osaka 545-8522 (JP)**
• **IMAMURA, Kimihiko
Osaka 545-8522 (JP)**
• **KUSASHIMA, Naoki
Osaka 545-8522 (JP)**

(74) Representative: **Müller-Boré & Partner
Patentanwälte PartG mbB
Friedenheimer Brücke 21
80639 München (DE)**

(54) **BASE STATION, TERMINAL, COMMUNICATION SYSTEM, COMMUNICATION METHOD AND INTEGRATED CIRCUIT**

(57)     There is provided a base station that communicates with a terminal by using a resource element constituted by a sub-carrier and an OFDM symbol. The base station includes an EPDCCH generator, a reference signal generator, and a transmitter. The EPDCCH generator generates an EPDCCH for notification of control information for a terminal. The reference signal generator generates a first demodulation reference signal or a second demodulation reference signal which is a demodulation reference signal associated with the EPDCCH and is enabled to be multiplexed between a plurality of antenna ports. The transmitter transmits the EPDCCH and transmits the first demodulation reference signal or the second demodulation reference signal selected based on a configuration for the terminal.

FIG. 1

EP 2 975 895 A1

**Description**

Technical Field

The present invention relates to a base station, a terminal, a communication system, a communication method, and an integrated circuit.

Background Art

In a radio communication system such as Wideband Code Division Multiple Access (WCDMA), Long Term Evolution (LTE), and LTE-Advanced (LTE-A) by Third Generation Partnership Project (3GPP), and Wireless LAN, Worldwide Interoperability for Microwave Access (WiMAX) by The Institute of Electrical and Electronics engineers (IEEE), a base station (cell, transmission station, transmission apparatus, and eNodeB), and a terminal (mobile terminal, reception station, mobile station, reception apparatus, and user equipment (UE)) perform radio communication with each other by using a cell. Each of the base station and the terminal includes a plurality of transmission and reception antennae, and performs spatial multiplexing on a data signal by using the Multi Input Multi Output (MIMO) technology. Thus, high speed data communication may be realized.

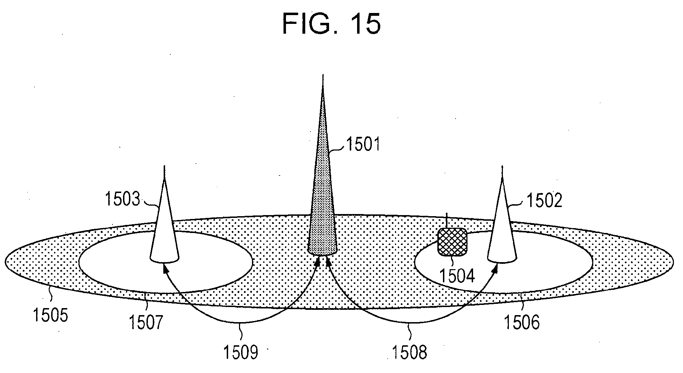

In such a radio communication system, heterogeneous network deployment (HetNet) may be used with a macro cell having wide coverage and a small cell having coverage narrower than the macro cell. Here, the small cell includes a remote radio head (RRH), a picocell, a femtocell, and the like. Fig. 15 is a schematic diagram of a radio communication system using the heterogeneous network deployment. For example, a macro cell 1501, a small cell 1502, and a small cell 1503 constitute the heterogeneous network.

In Fig. 15, the macro cell 1501 constructs coverage 1505, and the small cell 1502 and the small cell 1503 respectively constructs coverage 1506 and coverage 1507. The macro cell 1501 is connected with the small cell 1502 through a line 1508 and is connected with the small cell 1503 through a line 1509. With this, the macro cell 1501 can transmit and receive a data signal or a control signal (control information) to and from the small cell 1502 and the small cell 1503. Here, for example, a wired line such as an optical fiber or a wireless line using a relay technology is used for the line 1508 and the line 1509. At this time, some or all of the macro cell 1501, the small cell 1502, and the small cell 1503 use the same resources, and thus it is possible to improve comprehensive spectral efficiency (transmission capacity) in an area of the coverage 1505.

The terminal 1504 can perform single cell communication with the macro cell 1501 or the small cell 1502 in a case where the terminal 1504 is positioned in the coverage 1506. The terminal 1504 can perform multi-cell communication (coordinated communication) with the macro cell 1501 and the small cell 1502 in a case where the terminal 1504 is positioned in the coverage 1506.

In the radio communication system, the base station may transmit a reference signal (RS) which is a known signal between the base station and the terminal to the terminal. This reference signal can transmit a plurality of reference signals for various purposes such as demodulation of a signal or a channel, and a report of a channel state. For example, a cell-specific reference signal (CRS; Cell-specific RS) is transmitted as a reference signal specified for a cell, at all subframes and a predetermined frequency interval over a system bandwidth. Details of the CRS are disclosed in NPL 1.

Citation List

Non Patent Literature

NPL 1: 3rd Generation Partnership Project; Technical Specification Group Radio Access Network; Evolved Universal Terrestrial Radio Access (E-UTRA); Physical Channels and Modulation(Release 11), 3GPPTS 36.211 v11.1.0, December, 2012.

Summary of Invention

Technical Problem

However, a cell is required to normally transmit the CRS so as to also perform connection with a terminal entering into the cell in a case where a terminal is not present in the cell. In such a case, power of a base station which provides a service in the cell is consumed. Signals which are specified for a cell, such as the CRS may result in inter-cell interference. The inter-cell interference causes deterioration of transmission efficiency. Particularly, the inter-cell interference by the CRS has a large influence in a case where many small cells are in a macro cell in a communication system using the heterogeneous network deployment.

Considering the above-described problems, an object of the present invention is to provide a base station, a terminal, a communication system, a communication method, and an integrated circuit which can reduce inter-cell interference and improve transmission efficiency in the communication system in which the base station and the terminal communicate with each other.

Solution to Problem

(1) This invention is to solve the above-described problems. According to an aspect of the present invention, there is provided a base station which communicates with a terminal by using a resource element constituted by a sub-carrier and an OFDM symbol. The base station includes an EPDCCH generator, a reference signal generator, and a transmitter. The EPDCCH generator generates an EPDCCH for notification of control information for the terminal. The reference signal generator generates a first demodulation reference signal or a second demodulation reference signal which is a demodulation reference signal associated with the EPDCCH and is enabled to be multiplexed between a plurality of antenna ports. The transmitter transmits the EPDCCH and transmits the first demodulation reference signal or the second demodulation reference signal selected based on a configuration for the terminal.

(9) According to an aspect of the present invention, there is provided a terminal which communicates with a base station by using a resource element constituted by a sub-carrier and an OFDM symbol. The terminal includes a receiver configured to receive an EPDCCH for notification of control information for the terminal and receives a first demodulation reference signal or a second demodulation reference signal which is a demodulation reference signal associated with the EPDCCH and is enabled to be multiplexed between a plurality of antenna ports. The first demodulation reference signal or the second demodulation reference signal is selected based on a configuration for the terminal.

(10) According to an aspect of the present invention, there is provided a communication system in which a base station and a terminal communicate with each other by using a resource element constituted by a sub-carrier and an OFDM symbol. The base station includes an EPDCCH generator, a reference signal generator, and a transmitter. The EPDCCH generator generates an EPDCCH for notification of control information for the terminal. The reference signal generator generates a first demodulation reference signal or a second demodulation reference signal which is a demodulation reference signal associated with the EPDCCH and is enabled to be multiplexed between a plurality of antenna ports. The transmitter transmits the EPDCCH and transmits the first demodulation reference signal or the second demodulation reference signal selected based on a configuration for the terminal. The terminal includes a receiver configured to receive the EPDCCH and receive the first demodulation reference signal or the second demodulation reference signal.

(11) According to an aspect of the present invention, there is provided a communication method which is used in a base station communicating with a terminal by using a resource element constituted by a sub-carrier and an OFDM symbol. The communication method includes a step of generating an EPDCCH for notification of control information for the terminal, a step of generating a first demodulation reference signal or a second demodulation reference signal which is a demodulation reference signal associated with the EPDCCH and is enabled to be multiplexed between a plurality of antenna ports, and a step of transmitting the EPDCCH and transmitting the first demodulation reference signal or the second demodulation reference signal selected based on a configuration for the terminal.

(12) According to an aspect of the present invention, there is provided a communication method which is used in a terminal communicating with a base station by using a resource element constituted by a sub-carrier and an OFDM symbol. The communication method includes a step of receiving an EPDCCH for notification of control information for the terminal and receiving a first demodulation reference signal or a second demodulation reference signal which is a demodulation reference signal associated with the EPDCCH and is enabled to be multiplexed between a plurality of antenna ports. The first demodulation reference signal or the second demodulation reference signal is selected based on a configuration for the terminal.

(13) According to an aspect of the present invention, there is provided an integrated circuit which is realized in a base station which communicates with a terminal by using a resource element constituted by a sub-carrier and an OFDM symbol. The integrated circuit includes a function to generate an EPDCCH for notification of control information for the terminal, a function to generate a first demodulation reference signal or a second demodulation reference signal which is a demodulation reference signal associated with the EPDCCH and is enabled to be multiplexed between a plurality of antenna ports, and a function to transmit the EPDCCH and transmit the first demodulation reference signal or the second demodulation reference signal selected based on a configuration for the terminal.

(14) According to an aspect of the present invention, there is provided an integrated circuit which is a communication method used in a terminal which communicates with a base station by using a resource element constituted by a sub-carrier and an OFDM symbol. The integrated circuit includes a function to receive an EPDCCH for notification of control information for the terminal and receive a first demodulation reference signal or a second demodulation reference signal which is a demodulation reference signal associated with the EPDCCH and is enabled to be multiplexed between a plurality of antenna ports. The first demodulation reference signal or the second demodulation reference signal is selected based on a configuration for the terminal.

Advantageous Effects of Invention

According to this invention, it is possible to improve transmission efficiency in a radio communication system in which a base station and a terminal communicate with each other.

Brief Description of Drawings

[Fig. 1] Fig. 1 is a schematic block diagram illustrating a structure of a base station according to this embodiment.
[Fig. 2] Fig. 2 is a schematic block diagram illustrating a structure of a terminal according to this embodiment.
[Fig. 3] Fig. 3 is a diagram illustrating a frame structure according to this embodiment.
[Fig. 4] Fig. 4 is a diagram illustrating an example of a resource structure of a sub-frame according to this embodiment.
[Fig. 5] Fig. 5 is a diagram illustrating an example of a resource block pair using a first DMRS.
[Fig. 6] Fig. 6 is a diagram illustrating an example of a resource block pair using a second DMRS.
[Fig. 7] Fig. 7 is a diagram illustrating another example of the resource block pair using the second DMRS.
[Fig. 8] Fig. 8 is a diagram illustrating a flowchart of the terminal using an example of a selection method of the first DMRS and the second DMRS.
[Fig. 9] Fig. 9 is a diagram illustrating a flowchart of the terminal using another example of the selection method of the first DMRS and the second DMRS.
[Fig. 10] Fig. 10 is a diagram illustrating an example of frequency assignment in a communication system using a plurality of carrier types.
[Fig. 11] Fig. 11 is a diagram illustrating an example of a resource block pair using a tracking RS.
[Fig. 12] Fig. 12 is a diagram illustrating a flowchart of a terminal using an example of a selection method of the first DMRS and the second DMRS.
[Fig. 13] Fig. 13 is a diagram illustrating an example of a sub-frame configuration in a communication system using a plurality of sub-frame types.
[Fig. 14] Fig. 14 is a diagram illustrating a flowchart of a terminal using an example of a selection method of the first DMRS and the second DMRS.
[Fig. 15] Fig. 15 is a schematic diagram of a radio communication system using heterogeneous network deployment.
Description of Embodiments

A technology which will be described in this specification may be used in a communication system for a code division multiple access (CDMA) system, a time division multiple access (TDMA) system, a frequency division multiple access (FDMA) system, an orthogonal FDMA(OFDMA) system, a single carrier FDMA (SC-FDMA) system, an interleave-division multiple access (IDMA), and other system. The terms of a "system" and a "network" may be often used synonymously. Third Generation Partnership Project (3GPP) standardizes communication systems referred to as Long Term Evolution (LTE) and LTE-Advanced (LTE-A). LTE corresponds to an UMTS using E-UTRA in which OFDMA is employed for a downlink and SC-FDMA is employed for an uplink. LTE-A corresponds to a system, a radio technology, or a standard obtained by evolving LTE. A case where the technology which will be described below is used in LTE and/or LTE-A will be described, but the technology may be applied to other communication systems. In the following descriptions, terms in LTE standards, terms in LTE-A standards, and terms in 3GPP will be used.

<First Embodiment>

Hereinafter, a first embodiment of the present invention will be described. A communication system according to this embodiment includes a base station and a terminal. Here, the base station may correspond to a transmission apparatus, a cell, a transmission point, a transmission antenna group, a transmission antenna port group, a component carrier, or eNodeB. The base station includes cases of a macro cell, a picocell, a femtocell, a small cell, a Remote Radio Head (RRH), a distributed antenna, and the like. The terminal may correspond to a terminal apparatus, a mobile terminal, a reception point, a reception terminal, a reception apparatus, a reception antenna group, a reception antenna port group, or user equipment (UE). The terminal enables identification of a base station (transmission point) based on parameters which are specified for a cell, or parameters which are specified for the terminal. For example, the terminal enables identification of a base station (transmission point) based on a cell ID which is a cell-specific identifier, parameters (virtual cell ID and the like) which are configured for the terminal through signaling of a higher layer, and the like.

In the communication system according to this embodiment, the base station 100 and the terminal 200 perform data communication, and thus transmit and/or receive control information and/or data from or to each other through a downlink and/or an uplink.

The base station 100 transmits a PDCCH (physical downlink control channel, first control channel), an EPDCCH (Enhanced PDCCH, enhanced physical downlink control channel, second control channel), and/or a PDSCH (physical downlink shared channel) to the terminal 200 through the downlink. The control information is transmitted through the PDCCH and/or the EPDCCH. Data is transmitted through the PDSCH. The signaling of the higher layer may be transmitted through the PDSCH. That is, the data may include control information of the higher layer. For example, the higher layer corresponds to radio resource control (RRC) and the like. For this reason, the signaling of the higher layer is also referred to as RRC signaling.

The terminal 200 transmits a PUCCH (physical uplink control channel) and/or a PUSCH (physical uplink shared channel) to the base station 100 through an uplink. The control information is transmitted through the PUCCH and/or the PUSCH. Data is transmitted through the PUSCH.

Here, the PDCCH, the EPDCCH, the PDSCH, the PUCCH, and the PUSCH are one type of a physical channel and a channel defined on a physical frame. In the following descriptions, a case where the base station 100 and the terminal 200 perform data communication with each other will be described. However, a plurality of base stations and/or terminals may be included.

<Transmission and Reception Device Structure>

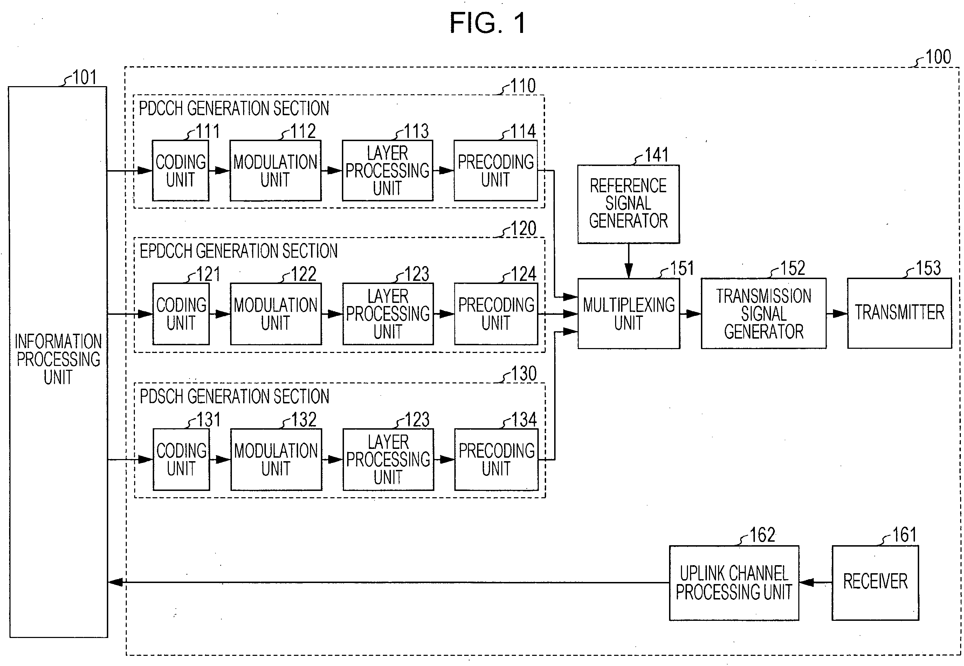

Fig. 1 is a schematic block diagram illustrating a structure of the base station according to the embodiment of the present invention. In Fig. 1, the base station 100 includes an information processing section 101, a PDCCH generation section 110, an EPDCCH generation section 120, a PDSCH generation section 130, a reference signal generator 141, a multiplexing unit 151, a transmission signal generator 152, a transmitter 153, a receiver 161, and an uplink channel processing unit 162. The PDCCH generation section 110 includes a coding unit 111, a modulation unit 112, a layer processing unit 113, and a precoding unit 114. The EPDCCH generation section 120 includes a coding unit 121, a modulation unit 122, a layer processing unit 123, and a precoding unit 124. The PDSCH generation section 130 includes a coding unit 131, a modulation unit 132, a layer processing unit 133, and a precoding unit 134. The base station 100 includes a control unit (not illustrated), and the control unit may control various types of processing in the base station 100.

The information processing section 101 generates information to be transmitted to the terminal 200 through the downlink channel, and performs processing on information transmitted from the terminal 200 through the uplink channel. The information processing section 101 may communicate with the higher layer. The information processing section 101 may communicate with other base stations.

The information processing section 101 generates control information for the terminal 200 and/or data for the terminal 200. The control information (downlink control information (DCI)) for the terminal 200 is input to the PDCCH generation section 110 and/or the EPDCCH generation section 120. The data (transport block, code word, and DL-SCH) for the terminal 200 is input to the PDSCH generation section 130. Here, the data may be set as a unit of performing error correction coding. The data may be set as a unit of performing retransmission control such as Hybrid Automatic Repeat reQuest (HARQ). The base station 100 may transmit plural pieces of control information and/or data to the terminal 200.

The information processing section 101 performs processing on the control information from the terminal 200 and/or data from the terminal 200. The control information (uplink control information (UCI)) from the terminal 200 is transmitted through the PUCCH and/or the PUSCH. The uplink control information corresponds to information indicating an ACK or a NACK in the HARQ, feedback information (for example, RI, PMI, PTI, CQI, and the like), and/or information indicating a request of scheduling. Data (transport block, code word, and UL-SCH) from the terminal 200 is transmitted through the PUSCH.

The PDCCH generation section 110 generates the PDCCH based on the input control information. The coding unit 111 performs the following processing on the input control information: error detection coding using a Cyclic Redundancy Check (CRC), error correction coding using an error correction code such as a convolutional code, and scramble coding using a pseudo random sequence. The coding unit 111 performs scrambling on a parity bit (redundant bit) in the CRC by using an identifier (UE-ID and Radio Network Temporary ID (RNTI)) specified for the terminal 200. The coding unit 111 may control a coding rate by using a predetermined method. The modulation unit 112 modulates a signal generated by the coding unit 111 by using a modulation method such as Quadrature Phase Shift Keying (QPSK). The layer processing unit 113 performs layer processing such as layer mapping on a signal generated by the modulation unit 112. The layer mapping in the layer processing unit 113 is performed by mapping (allocating) the input signal onto (to) one layer or more. The precoding unit 114 performs precoding processing on a signal generated by the layer processing unit 113 by using a predetermined method, and thus generates a signal for each antenna port. For example, the precoding unit 114 performs the precoding processing for obtaining a frequency diversity effect. In the PDCCH generation section 110, the number of layers of the PDCCH may be the same as the number of antenna ports. The PDCCH may be transmitted by using some or all of antenna ports 0 to 3.

The EPDCCH generation section 120 generates the EPDCCH based on the input control information. The coding unit 121 performs the following processing on the input control information: error detection coding using a cyclic redundancy check (CRC), error correction coding using an error correction code such as a convolutional code, and scramble coding using a pseudo random sequence. The coding unit 121 performs scrambling on a parity bit in a CRC by using an identifier which is specified for the terminal 200. The coding unit 121 may control a coding rate by using a predetermined method. The modulation unit 122 modulates a signal generated by the coding unit 121 by using a modulation method such as QPSK. The layer processing unit 123 performs layer processing such as layer mapping on a signal generated by the modulation unit 122. The layer mapping in the layer processing unit 123 is performed by mapping (allocating) an input signal onto (to) one layer or more. The precoding unit 124 performs precoding processing on a signal generated by the layer processing unit 123, by using a predetermined method, and thus generates a signal for each antenna port. For example, the precoding unit 124 performs precoding processing for obtaining a frequency diversity effect and/or a frequency scheduling effect. In the EPDCCH generation section 120, a signal of each layer of an EPDCCH may be the same as the signal of each antenna port. The EPDCCH may be transmitted by using some or all of antenna ports 107 to 110 or antenna ports 107A to 110A. The EPDCCH generation section 120 may map an EPDCCH generated by the precoding unit 124 onto a predetermined resource element.

The PDSCH generation section 130 generates a PDSCH based on input data. The data is input from a higher layer and the like. The coding unit 131 performs the following processing on the input data: scramble coding using a pseudo random sequence, and error correction coding using an error correction code such as a turbo code. The coding unit 131 may control a coding rate by using a predetermined method. The modulation unit 132 modulates a signal generated by the coding unit 131 by using a modulation method such as QPSK and_Quadrature Amplitude Modulation (QAM). The layer processing unit 133 performs layer processing such as layer mapping on a signal generated by the modulation unit 132. The layer mapping in the layer processing unit 133 is performed by mapping (allocating) an input signal onto one layer or more. The number of layers for a PDSCH is determined by using the multiplying number (rank number) of MIMO for the terminal 200. The precoding unit 134 performs precoding processing on a signal generated by the layer processing unit 133, by using a predetermined method, and thus generates a signal for each antenna port. For example, the precoding unit 134 performs the precoding processing for obtaining the frequency scheduling effect. In the PDSCH generation section 130, a signal of each layer of a PDSCH may be the same as the signal of each antenna port. The PDSCH may be transmitted by using some or all of antenna ports 7 to 14 or antenna ports 7A to 14A.

The reference signal generator 141 generates a reference signal which is a signal (sequence) which has been mutually known to the base station 100 and the terminal 200. The reference signal may be associated with each of the antenna ports. The reference signal includes a cell-specific reference signal (CRS; Cell-specific RS), an UE-specific reference signal (UERS; UE-specific RS) which is associated with the PDSCH, a demodulation reference signal (DM-RS; Demodulation RS) which is associated with the EPDCCH, a reference signal (CSI-RS; Channel State Information-RS, CSI reference signal) for channel state measurement. Here, the UE-specific reference signal associated with the PDSCH is also referred to as the demodulation reference signal associated with the PDSCH or a DMRS for a PDSCH. The demodulation reference signal associated with the EPDCCH is also referred to as a DMRS for an EPDCCH. Here, the antenna port means a logical antenna which is used in signal processing, and a plurality of physical antennae may constitute one antenna port. A plurality of physical antennae which constitutes the same antenna port transmits the same signal. A plurality of physical antennae of the same antenna port may be used for delay diversity or cyclic delay diversity (CDD).

The cell-specific reference signal may be transmitted by using the antenna ports 0 to 3, and be used for demodulation of the PDCCH and a cell-specific signal by the terminal 200. The reference signal for channel state measurement may be transmitted by using antenna ports 15 to 22, and be used for measuring a channel state of a downlink of which the terminal 200 will notify the base station 100.

The DMRS for a PDSCH may be transmitted by using the antenna ports 7 to 14 and the antenna ports 7A to 14A, and be used for modulation of the PDSCH by the terminal 200. A DMRS for a PDSCH which is transmitted through the antenna port 7 to 14 is also referred to as a first DMRS for a PDSCH. A DMRS for a PDSCH which is transmitted through the antenna port 7A to 14A is also referred to as a second DMRS for a PDSCH. The antenna ports 7 to 14 and the antenna ports 7A to 14A are independent antenna ports from each other. That is, the first DMRS for a PDSCH and the second DMRS for a PDSCH are independent DMRSs for a PDSCH from each other.

The first DMRS for a PDSCH and the second DMRS for a PDSCH may be transmitted by using the same antenna port. That is, antenna ports through which the first DMRS for a PDSCH and the second DMRS for a PDSCH are transmitted may be the antenna ports 7 to 14.

A DMRS for an EPDCCH may be transmitted by using the antenna ports 107 to 110 and the antenna ports 107A to 110A and be used for demodulation of an EPDCCH by the terminal 200. A DMRS for an EPDCCH transmitted by using the antenna ports 107 to 110 is also referred to as a first DMRS for an EPDCCH. A DMRS for an EPDCCH transmitted by using the antenna ports 107A to 110A is also referred to as a second DMRS for an EPDCCH. The antenna ports 107 to 110 and the antenna ports 107A to 110A are independent antenna ports from each other. That is, the first DMRS for an EPDCCH and the second DMRS for an EPDCCH are independent DMRSs for an EPDCCH from each other.

The first DMRS for an EPDCCH and the second DMRS for an EPDCCH may be transmitted by using the same antenna port. That is, antenna ports through which the first DMRS for an EPDCCH and the second DMRS for an EPDCCH are transmitted may be the antenna ports 107 to 110.

The reference signal generator 141 performs precoding processing on each reference signal by using a predetermined method, and thus generates a signal for each antenna port. Here, precoding processing the same as that on a channel associated with the corresponding antenna port is performed on the reference signal of each antenna port. That is, precoding processing the same as that in the precoding unit 114 is performed on the cell-specific reference signal. Precoding processing the same as that in the precoding unit 124 is performed on the DMRSs for an EPDCCH. Precoding processing the same as that in the precoding unit 134 is performed on the DMRSs for a PDSCH. Precoding processing may not be performed on the reference signal for channel state measurement.

The precoding processing may be performed by using various methods. Precoding processing through which a frequency diversity effect is obtained may be performed by using space frequency block coding (SFBC), space time block coding (STBC), frequency switched transmit diversity (FSTD) and/or cyclic delay diversity (CDD), and the like. Precoding processing through which a frequency scheduling effect is obtained may be performed by multiplying a predetermined precoding matrix. The precoding processing through which the frequency scheduling effect may be performed by using phase rotation and/or amplitude control considering a channel state such that the terminal 200 performs reception with high efficiency.

The multiplexing unit 151 multiplexes a PDCCH generated by the PDCCH generation section 110, an EPDCCH generated by the EPDCCH generation section 120, a PDSCH generated by the PDSCH generation section 130, and/or a reference signal generated by the reference signal generator 141, and maps a result of multiplexing onto a resource element. Here, the resource element refers to the minimum unit for mapping a signal which is constituted by one OFDM symbol and one sub-carrier. Signals and/or channels which are multiplexed by the multiplexing unit 151 may be mapped onto different resource elements and/or different antenna ports, and thus may be mutually orthogonal to each other or semi-orthogonal to each other. A structure in which the PDCCH generation section 110, the EPDCCH generation section 120, the PDSCH generation section 130, and the reference signal generator 141 respectively maps the PDCCH, the EPDCCH, the PDSCH, and the reference signal on a predetermined resource element, and the multiplexing unit 151 multiplexes results of mapping may be made.

The transmission signal generator 152 generates a transmission signal based on a signal obtained by multiplexing of the multiplexing unit 151. The transmission signal generator 152 performs frequency-time conversion on the signal obtained by multiplexing of the multiplexing unit 151, by using Inverse Fast Fourier Transform (IFFT), and adds a cyclic pre-fix (guard interval) having a predetermined cyclic pre-fix length to a result of conversion. The transmission signal generator 152 further performs digital-analog conversion, frequency conversion to a radio frequency band, and the like, and thus generates a transmission signal. The transmitter (transmission antenna, base station transmitter) 153 transmits the transmission signal generated by the transmission signal generator 152, from one or the plurality of antenna ports (transmission antenna ports).

The receiver (base station receiver) 161 receives a transmission signal from the terminal 200. The uplink channel processing unit 162 performs processing on a PUCCH and/or a PUSCH from the terminal 200, and receives an UCI and/or data from the terminal 200. The received UCI and/or the received data are input to the information processing section 101.

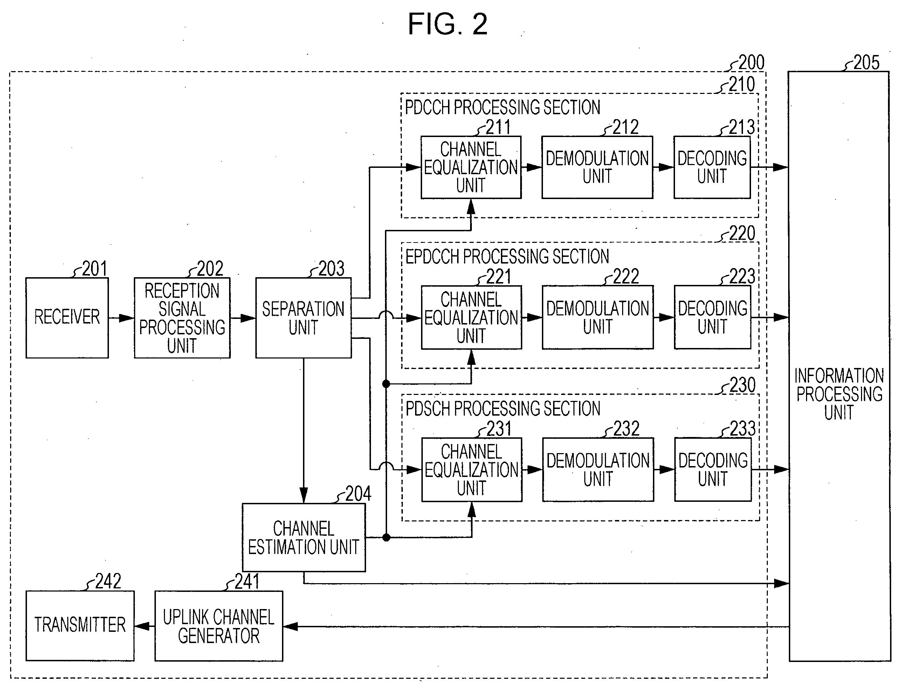

Fig. 2 is a schematic block diagram illustrating a structure of the terminal according to the embodiment of the present invention. In Fig. 2, the terminal 200 includes a receiver 201, a reception signal processing unit 202, a separation unit 203, a channel estimation unit 204, an information processing section 205, a PDCCH processing section 210, an EPDCCH processing section 220, a PDSCH processing section 230, an uplink channel generator 241, and a transmitter 242. The PDCCH processing section 210 includes a channel equalization unit 211, a demodulation unit 212, and a decoding unit 213. The EPDCCH processing section 220 includes a channel equalization unit 221, a demodulation unit 222, and a decoding unit 223. The PDSCH processing section 230 includes a channel equalization unit 231, a demodulation unit 232, and a decoding unit 233. The terminal 200 may include a control unit (not illustrated) and the control unit may control various types of processing in the terminal 200.

The receiver (reception antenna, terminal receiver) 201 receives a signal transmitted by the base station 100 by using one or a plurality of reception antenna ports. The reception signal processing unit 202 performs time-frequency conversion on a signal received by the receiver 201. The time-frequency conversion is performed by frequency conversion from a radio frequency signal to a baseband signal, analog-digital conversion, removal of an added cyclic pre-fix, Fast Fourier Transform (FFT), and the like.

The separation unit 203 separates (demaps) a signal multiplexed (mapped) by the multiplexing unit 151 of the base station 100. Specifically, the separation unit 203 separates a PDCCH, an EPDCCH, a PDSCH, and/or a reference signal from each other by using a predetermined method. The PDCCH is input to the PDCCH processing section 210. The EPDCCH is input to the EPDCCH processing section 220. The PDSCH is input to the PDSCH processing section 230. The reference signal is input to the channel estimation unit 204. For example, in a case where resources having a probability of mapping of a channel or a signal are predefined, the separation unit 203 may separate the corresponding channel or the corresponding signal or separate candidates of the corresponding channel or candidates of the corresponding signal, from the defined resources. For example, in a case where notification of resources having a probability of mapping of a channel or a signal is received and the resources are configured, the separation unit 203 may separate the corresponding channel or the corresponding signal or separate candidates of the corresponding channel or candidates of the corresponding signal, from the configured resources. In a case where information indicating resources on which a PDSCH is mapped is included in control information received by performing notification through a PDCCH and/or an EPDCCH, the terminal 200 may detect the control information, and then the separation unit 203 may separate the PDSCH based on the detected control information.

The channel estimation unit 204 performs channel estimation for the PDCCH, the EPDCCH, and/or the PDSCH by using a reference signal. The channel estimation for the PDCCH is performed by using a cell-specific reference signal. The channel estimation for the EPDCCH is performed by using a DMRS for an EPDCCH. The channel estimation for the PDSCH is performed by using a DMRS for a PDSCH. The channel estimation unit 204 estimates fluctuation (frequency response and transfer function) of amplitude and a phase in each resource element, for a reception antenna port corresponding to each transmission antenna port by using the reference signal, and thus obtains a channel estimation value. The channel estimation unit 204 outputs the channel estimation value to the PDCCH processing section 210, the EPDCCH processing section 220, and/or the PDSCH processing section 230.

The channel estimation unit 204 generates feedback information by using the reference signal and inputs the generated feedback information to the information processing section 205. The base station 100 is notified of the feedback information as the UCI through the PUCCH and/or the PUSCH.

The PDCCH processing section 210 searches for PDCCH candidates for the terminal 200 from a PDCCH space, detects a PDCCH for the terminal 200, and recognizes control information of the terminal 200. The channel equalization unit 211 by using the PDCCH candidates input from the separation unit 203, and the channel estimation value input from the channel estimation unit 204 performs channel equalization (channel compensation) on the PDCCH candidates. The demodulation unit 212 demodulates a signal subjected to the channel equalization by the channel equalization unit 211, against a predetermined modulation method. The decoding unit 213 performs the following processing on the signal demodulated by the decoding unit 212: scramble decoding against predetermined scramble coding which uses a pseudo random sequence, error correction decoding against predetermined error correction coding, and error detection decoding against predetermined error detection coding. Here, the scramble decoding is performed on a CRC parity bit which is obtained by the error correction decoding, by using an identifier specified for the terminal 200, and the error detection decoding is performed. For this reason, if an error is detected from the corresponding PDCCH by the error detection decoding, the PDCCH processing section 210 may detect the corresponding PDCCH as a PDCCH of the terminal 200. The PDCCH processing section 210 distinguishes control information from the detected PDCCH. The control information is input to the information processing section 205 and is used in various types of control of the terminal 200. The PDCCH processing section 210 performs processing on all of the PDCCH candidates.

The EPDCCH processing section 220 searches for (monitors) EPDCCH candidates for the terminal 200 from an EPDCCH set (EPDCCH space) which is constituted by a plurality of PRB pairs, detects an EPDCCH of the terminal 200, and recognizes control information of the terminal 200. Each of the PRB pairs constituting the EPDCCH set may be configured so as to be specified for a terminal by the higher layer. Each of the PRB pairs constituting the EPDCCH set may be configured based on information specified for a cell. Each of the PRB pairs constituting the EPDCCH set may be defined in advance. The channel equalization unit 221 performs channel equalization (channel compensation) on the EPDCCH candidates by using the EPDCCH candidates input from the separation unit 203, and the channel estimation value input from the channel estimation unit 204. The demodulation unit 222 demodulates the signal which is subjected to the channel equalization by the channel equalization unit 221, against a predetermined modulation method. The decoding unit 223 performs the following processing on the signal demodulated by the decoding unit 222: scramble decoding against predetermined scramble coding which uses a pseudo random sequence, error correction decoding against predetermined error correction coding, and error detection decoding against predetermined error detection coding. Here, the scramble decoding is performed on a CRC parity bit which is obtained by the error correction decoding, by using an identifier specified for the terminal 200, and the error detection decoding is performed. For this reason, if an error is detected from the corresponding EPDCCH by the error detection decoding, the EPDCCH processing section 220 may detect the corresponding EPDCCH as an EPDCCH of the terminal 200. The EPDCCH processing section 220 distinguishes control information from the detected EPDCCH. The control information is input to the information processing section 205 and is used in various types of control of the terminal 200. The EPDCCH processing section 220 performs processing on all of the EPDCCH candidates.

The PDSCH processing section 230 performs processing on a PDSCH for the terminal 200, and detects data for the terminal 200. The processing performed by the PDSCH processing section 230 may be performed based on control information detected in the same sub-frame or the preceding sub-frame. The processing performed by the PDSCH processing section 230 may be performed based on control information which is defined in advance. The processing performed by the PDSCH processing section 230 may be performed based on control information received through the higher layer. The channel equalization unit 231 performs channel equalization (channel compensation) on the PDSCH by using the PDSCH input from the separation unit 203 and the channel estimation value input from the channel estimation unit 204. The demodulation unit 232 demodulates the signal which is subjected to the channel equalization by the channel equalization unit 231, against a predetermined modulation method. The decoding unit 233 performs the following processing on the signal demodulated by the decoding unit 232: scramble decoding against predetermined scramble coding which uses a pseudo random sequence, and error correction decoding against predetermined error correction coding. The PDSCH processing section 230 detects data from the processed PDSCH and outputs the detected data to the information processing section 205 and the like. The PDSCH processing section 230 may perform processing on a plurality of PDSCHs.

The information processing section 205 generates information to be transmitted to the base station 100 through an uplink channel, and performs processing on the information transmitted from the base station 100 through the downlink channel. The information processing section 205 may communicate with the higher layer.

The uplink channel generator 241 performs processing on UCI and/or data of which the base station 100 is notified, and generates a PUCCH and/or a PUSCH which will be transmitted to the base station 100. The transmitter (terminal transmitter) 242 transmits the PUCCH and/or the PUSCH generated by the uplink channel generator 241.

<Frame Format>

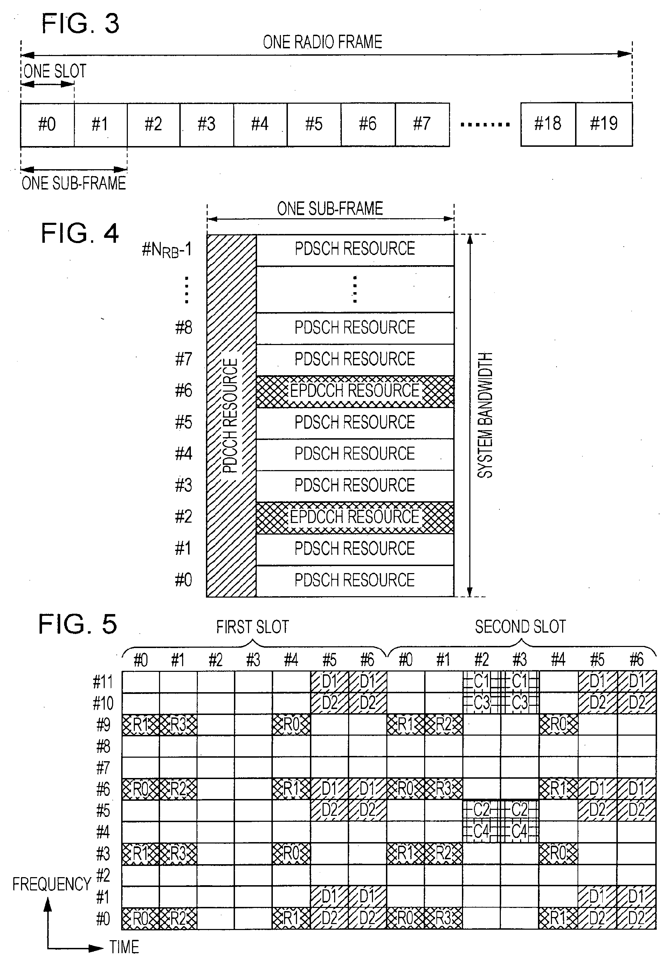

Fig. 3 is a diagram illustrating a frame structure according to this embodiment. Fig. 3 illustrates a structure of one radio frame. 20 slots constitute one radio frame. 10 sub-frames constitute the one radio frame. That is, two consecutive slots constitute one sub-frame. 7 or 6 OFDM symbols constitute one slot. An even-numbered slot is also referred to as a first slot and an odd-numbered slot is also referred to as a second slot.

Fig. 4 is a diagram illustrating an example of a resource structure of a sub-frame according to this embodiment. In this example, one sub-frame in which $N_{RB}$ physical resource block pairs (PRB; Physical Resource Block) constitute a system bandwidth is described. In the following descriptions, the resource block pair will be described simply as a resource block, a PRB, or an RB. That is, in the following descriptions, the resource block, the PRB, or the RB includes a resource block pair. In a sub-frame, zero leading OFDM symbol or more corresponds to a PDCCH resource (PDCCH space). The terminal 200 is notified of the number of OFDM symbols in the PDCCH space. For example, the leading OFDM symbol may be configured as a dedicated notification space in the PDCCH space, notification of this PDCCH space may be dynamically performed for each sub-frame. Notification of the PDCCH space may be statically performed by using control information of the higher layer. The maximum number of OFDM symbols in the PDCCH space is 4. The PDSCH resource (PDSCH space) or an EPDCCH resource (EPDCCH space, EPDCCH set) is used by using the PRB pair as a unit. In the example of Fig. 4, the RB Nos. 2 and 6 are configured as EPDCCH resources.

A predetermined number of sub-carriers and a predetermined number of OFDM symbols constitute one resource block. For example, 12 sub-carrier in a frequency direction and 7 OFDM symbols in a time direction constitute one resource block. In one resource block pair, two resource blocks are continuously arranged in the time direction. The time direction of the one resource block corresponds to one slot. A time direction of the one resource block pair corresponds to one sub-carrier. A resource constituted by one OFDM symbol and one sub-carrier is referred to as a resource element. Resource block pairs may be arranged in parallel in the frequency direction and the number of resource block pairs may be set for each base station. For example, the number of resource block pairs may be set to be in a range of 6 to 110. At this time, the width thereof in the frequency direction is referred to as the system bandwidth.

Here, the number of resource blocks may be changed in accordance with a frequency bandwidth (system bandwidth) used by the communication system. For example, 6 to 110 resource blocks may be used and a unit of using of the resource blocks is also referred to as a component carrier. The base station 100 may configure a plurality of component carriers for the terminal 200 by using frequency aggregation. For example, the base station 100 causes one component carrier for the terminal 200 to have 20 MHz, and configures 5 component carriers contiguously and/or non-contiguously in the frequency direction. Thus, the base station 100 may causes the total bandwidth which is allowed to be used by the communication system to be 100 MHz. For example, in each of serving cells, using of a transmission bandwidth up to 110 resource blocks is enabled.

In carrier aggregation, one serving cell is defined as a primary cell (PCell). In the carrier aggregation, serving cells other than the primary cell is defined as a secondary cell (SCell). In a downlink, a carrier corresponding to a serving cell is defined as a downlink component carrier (DLCC). In the downlink, a carrier corresponding to the primary cell is defined as a downlink primary component carrier (DLPCC). In the downlink, a carrier corresponding to the secondary cell is defined as a downlink secondary component carrier (DLSCC). In an uplink, a carrier corresponding to a serving cell is defined as an uplink component carrier (ULCC). In the uplink, a carrier corresponding to the primary cell is defined as an uplink primary component carrier (ULPCC). In the uplink, a carrier corresponding to the secondary cell is defined as an uplink secondary component carrier (ULSCC). That is, in the carrier aggregation, a plurality of component carriers for supporting a wide transmission bandwidth is collected. Here, for example, a primary base station may be considered as the primary cell, and a secondary base station may be considered as the secondary cell (the base station 100 perform configuring for the terminal 200).

In this embodiment, the base station 100 transmits a synchronization signal which is allowed to be used for the terminal 200 performing cell search. The synchronization signal may be defined as two types of a primary synchronization signal and a secondary synchronization signal. For example, the primary synchronization signal may be used for synchronization of the time domain performed by the terminal 200. The secondary synchronization signal may be used for synchronization of the frequency domain performed by the terminal 200. The synchronization signal is transmitted in a predetermined frequency domain. For example, the synchronization signal is transmitted by using 6 resource blocks at the center of the system band. The synchronization signal is transmitted at a predetermined time interval. For example, the primary synchronization signal is mapped onto the last OFDM symbol in the slot Nos. 0 and 10 in a radio frame. The secondary synchronization signal is mapped onto the second OFDM symbol from the last in the slot Nos. 0 and 10 in the radio frame.

<Control Information>

Next, details of the control information used in this embodiment will be described. The base station 100 notifies the terminal 200 of control information by using the PDCCH and/or the EPDCCH which is a control channel. Downlink control information (DCI) which is transmitted by the PDCCH or the EPDCCH is defined by a plurality of formats. Here, the format of the downlink control information is also referred to as a DCI format. That is, a field for each piece of uplink control information is defined in the DCI format.

For example, the control information may be defined in accordance with a purpose of the base station 100 notifying the terminal 200. Specifically, the control information may be defined in accordance with a purpose such as assignment information of a data channel in a downlink for the terminal 200, assignment information of the uplink data channel (PUSCH) and the uplink control channel (PUCCH) for the terminal 200, and/or information for a control of transmission power for the terminal 200. For this reason, for example, the base station 100 transmits a control channel onto which control information including assignment information of a PDSCH for the terminal 200 is mapped, and the PDSCH assigned based on the control information, in a case where the base station 100 transmits the PDSCH to the terminal 200. For example, the base station 100 transmits a PUCCH onto which control information including assignment information of the PUSCH for the terminal 200, in a case where the base station 100 assigns the PUSCH to the terminal 200. The base station 100 may transmit different plural pieces of control information or the same plural pieces of control information in the same sub-frame and in the same terminal 200 by different formats or the same format. The base station 100 may transmit a data channel of the downlink in a sub-frame different from a sub-frame in which control channel onto which control information including assignment information of a PDSCH for the terminal 200 is mapped is transmitted, in a case where the base station 100 transmits data of the downlink for the terminal 200.

For example, DCI Format 1 family (DCI format 1 and DCI format 1A) used in scheduling of one PDSCH (transmission of code word of one PDSCH or one downlink transport block) is defined as the DCI format for the downlink in one cell. That is, the DCI Format 1 family is used in transmission on the PDSCH using one transmission antenna port. The DCI Format 1 family is also used in transmission on the PDSCH by transmission diversity (TxD) using the plurality of transmission antenna ports.

DCI Format 2 family (DCI format 2, DCI format 2A, DCI format 2B, DCI format 2C, DCI format 2D, DCI format 2E, and the like) used in scheduling of one PDSCH (transmission of code word of the maximum two PDSCHs or the maximum two downlink transports) is defined as the DCI format for the downlink in one cell (transmission point). The DCI Format 2 family is used in transmission on the PDSCH from the one cell (transmission point) by using MIMO with a plurality of transmission antenna ports. For example, the DCI format 2D may be used in transmission on the PDSCH from one or a plurality of cells (transmission point) by using MIMO with the plurality of transmission antenna ports.

The base station 100 and the terminal 200 transmit and receive a signal in the higher layer to and from each other. For example, the base station 100 and the terminal 200 transmit and receive a radio resource control signal (also referred to as RRC signaling, an RRC message, and RRC information) in an RRC layer (Layer 3). Here, in the RRC layer, a signal which is dedicatedly transmitted to a certain terminal by the base station 100 is also referred to as a dedicated signal. That is, a configuration (information) of which notification is performed by the base station 100 using the dedicated signal is a configuration specified for a certain terminal.

The base station 100 and the terminal 200 transmit and receive an MAC control element in an MAC (Medium Access Control) layer (Layer 2). Here, the RRC signaling and/or the MAC control element are also referred to as a signal of the higher layer (Higher layer signaling).

<Control Channel>

Next, details of the PDCCH and the EPDCCH which are control channels used in this embodiment will be described. The base station 100 notifies the terminal 200 of control information by using the PDCCH and/or the EPDCCH which are control channels. The PDCCH is mapped onto some of PDCCH resources which are resources specified for the base station 100. The EPDCCH is mapped onto some or all of EPDCCH resources (EPDCCH set) which are resources specified for the base station 100 or the terminal 200.

The EPDCCH processing section 220 uses the DMRS for an EPDCCH in order to demodulate an EPDCCH having a probability, in a case where an EPDCCH of the terminal 200 mapped onto the EPDCCH space is searched for. The PDCCH processing section 210 uses the cell-specific reference signal in order to demodulate a PDCCH having a probability, in a case where a PDCCH of the terminal 200 mapped onto the PDCCH space is searched for.

Specifically, the PDCCH processing section 210 and/or the EPDCCH processing section 220 demodulates and decodes some or all of control channel candidates obtained based on types of control information (DCI; Downlink Control Information), a position of the mapped resource, the size of the mapped resource, and the like. Then, the PDCCH processing section 210 and/or the EPDCCH processing section 220 performs sequentially searching. The PDCCH processing section 210 and the EPDCCH processing section 220 use an error detection code (for example, a cyclic redundancy check (CRC) code) added to control information, as a method of determining whether or not the control information of the terminal 200 is valid. Such a searching method is also referred to as blind decoding.

The PDCCH processing section 210 and/or the EPDCCH processing section 220 recognizes control information mapped onto the detected control channel, in a case where the control channel of the terminal 200 is detected. The recognized control information is shared to the entirety (including the higher layer) of the terminal 200 and thus is used in various types of control of the terminal 200, such as reception processing of the downlink data channel (PDSCH), transmission processing of the uplink data channel (PUSCH) or the uplink control channel (PUCCH), and transmission power control in the uplink.

The separation unit 203 separates the data channel and outputs the separated data channel to the PDSCH processing section 230, in a case where the PDCCH processing section 210 and/or the EPDCCH processing section 220 map control information including assignment information of the downlink data channel onto the detected control channel.

Here, the PDCCH or the EPDCCH is used for notifying (designating) the terminal of the downlink control information (DCI). For example, the downlink control information includes information regarding resource assignment of the PDSCH, information regarding a modulation and coding scheme (MCS), information regarding a scrambling identity (also referred to as a scrambling identifier), information regarding a reference signal sequence identity (also referred to as a base sequence identity, a base sequence identifier, and a base sequence index).

Details of the PDCCH will be described below. A plurality of control channel element (CCE) constitutes a PDCCH (first control channel).

The number of CCEs used in each downlink component carrier depends on a downlink component carrier bandwidth, the number of OFDM symbols constituting the PDCCH, and the number of transmission antenna ports of the cell-specific reference signal in the downlink corresponding to the number of transmission antennae of the base station 100 which are used in communication. A plurality of downlink resource elements (resource defined to include one OFDM symbol and one sub-carrier) constitutes the CCE.

A number for identifying a CCE is given to the CCE used between the base station 100 and the terminal 200. Number application to a CCE is performed based on a rule which has been determined in advance, so as to be specified for the base station 100. One CCE or more constitute the PDCCH. The number of CCEs constituting one PDCCH is referred to as a CCE aggregation level. The CCE aggregation level for constituting a PDCCH is configured in the base station 100 in accordance with a coding rate configured in the PDCCH, and the number of bits of a DCI included in the PDCCH. Combination of CCE aggregation levels having a probability of the CCE aggregation level being used for the terminal 200 is determined in advance.

9 different resource element groups (REG) distributed in the frequency domain and the time domain constitute one CCE. 4 adjacent resource elements in the frequency domain constitute one resource element group. Specifically, in all of the downlink component carriers, all of the resource element groups to which numbers are attached are interleaved in a unit of the resource element group by using a block interleaver, and 9 resource element groups which have consecutive numbers after interleaving constitute one CCE.

In each terminal, a space (SS; Search Space) for searching for the PDCCH is configured. A plurality of CCEs constitutes the SS. A plurality of CCEs having consecutive numbers from a CCE having the minimum number constitutes the SS and the number of the plurality of CCEs having consecutive numbers is determined in advance. An aggregate of a plurality of PDCCH candidates constitutes the SS of each CCE aggregation level. The SS is classified into a cell-specific SS (CSS) of CCEs having the common number in a cell from a CCE having the minimum number, and an UE-specific SS (USS) of CCEs having terminal-specific numbers from the CCE having the minimum number. The PDCCH to which control information such as system information, information regarding of paging, which is read by a plurality of terminals is assigned, or PDCCH to which a downlink/uplink grant indicating an instruction of fallback to a lower transmission method or random access is assigned may be arranged in the CSS.

The base station 100 transmits the PDCCH by using one CCE or more in the SS configured in the terminal 200. The terminal 200 decodes a reception signal by using the one CCE or more in the SS and performs processing for detecting the PDCCH for the terminal 200 itself (referred to as blind decoding). The terminal 200 configures different SSs from each other for each CCE aggregation level. Then, the terminal 200 performs blind decoding by using the CCE having a combination which is determined in advance in each of the SSs different from each other for each CCE aggregation level. In other words, the terminal 200 performs blind decoding on each of the PDCCH candidates in each of the SSs different from each other for each CCE aggregation level. A series of processing in the terminal 200 is referred to as monitoring of a PDCCH.

Details of the EPDCCH will be described below. The EPDCCH (second control channel) is mapped onto a portion or the entirety of the EPDCCH space. In a case where the base station 100 notifies the terminal 200 of the EPDCCH, the base station 100 configures monitoring of the EPDCCH for the terminal 200 and maps the EPDCCH for the terminal 200 onto the EPDCCH space. In a case where the base station 100 notifies the terminal 200 of the PDCCH, the base station 100 may map the PDCCH for the terminal 200 onto the PDCCH space regardless of a configuration of monitoring of the EPDCCH for the terminal 200.

The terminal 200 performs blind decoding on the PDCCH for the terminal 200 in the PDCCH space and/or the EPDCCH for the terminal 200 in the EPDCCH space, in a case where monitoring of the EPDCCH is configured by the base station 100. The terminal 200 does not perform blind decoding on the EPDCCH for the terminal 200 from the PDCCH space in a case where monitoring of the EPDCCH is not configured by the base station 100.

The base station 100 may configure the EPDCCH space (EPDCCH set, EPDCCH-PRB set) in the terminal 200. The EPDCCH set is configured by using control information of the higher layer of which the terminal 200 is notified from the base station 100. For example, the EPDCCH set is configured by using EPDCCH configuration information which is control information for configuring a resource (EPDCCH set) which is used for monitoring the EPDCCH. The EPDCCH configuration information is configuration information specified for the terminal 200. The EPDCCH set is defined by an RPB pair for monitoring the EPDCCH, and/or a sub-frame. One EPDCCH set or more may be configured and the EPDCCH configuration information is independently configured for each EPDCCH set. One PRB pair or more constitutes the EPDCCH space. The number of the RB pairs constituting the EPDCCH space is one of a plurality of predetermined values which are defined in advance. For example, the number of the RB pairs constituting the EPDCCH space may be 2, 4, or 8.

The base station 100 may configure a search space in the EPDCCH space which is configured in the terminal 200. The base station 100 maps the EPDCCH for the terminal 200 onto the configured search space of the EPDCCH space. The base station 100 may cause a portion or the entirety of the EPDCCH space and/or the search space to be common for a plurality of terminals. That is, a plurality of EPDCCHs for the plurality of terminals may be multiplexed in the EPDCCH space and/or the search space. Here, a predetermined number of enhanced control channel elements (ECCEs; Enhanced CCEs) constitute the EPDCCH. The ECCE is a unit of constituting the EPDCCH. A predetermined number of enhanced resource element groups (EREGs; Enhanced REGs) constitute the ECCE.

One PRB pair (RB pair) constitutes a predetermined number of EREG. For example, one PRB pair constitutes 16 EREGs. A number (index) for identification is given to each of the EREGs. For example, in a case where one PRB pair constitutes 16 EREGs, numbers of 0 to 15 are used as EREG numbers for identifying the EREGs. The EREGs having EREG numbers of 0 to 15 are also respectively referred to as an EREG0 to an EREG15. The number attachment to the EREG in one PRB pair is performed based on a predetermined rule. For example, the EREG numbers of the EREG0 to the EREG15 in one PRB pair are sequentially mapped in accordance with a frequency priority mapping rule (frequency-first and time-second).

The EPDCCH may use either of localized transmission and distributed transmission. The localized transmission or the distributed transmission may be configured independently for each EPDCCH set. The localized transmission and the distributed transmission are different from each other in that mapping of the EREGs for the ECCE is different. In a case of the localized transmission, a plurality of EREGs in the same PRB pair constitutes one ECCE. That is, since the EPDCCH is transmitted by using a resource localized in the frequency direction, in the localized transmission, a precoding gain or a frequency scheduling gain is easily obtained. In a case of the distributed transmission, a plurality of EREGs in a plurality of PRB pairs which are different from each other constitutes one ECCE. That is, since the EPDCCH is transmitted by using a resource distributed in the frequency direction, in the distributed transmission, a frequency diversity gain is easily obtained.

The EPDCCH mapped onto the EPDCCH space is processed for each piece of control information which is used for one or a plurality of terminals; scrambling processing, modulation processing, layer mapping processing, precoding processing, and the like may be performed similarly to the PDSCH. The same precoding processing is performed on the EPDCCH and the DMRS for the EPDCCH in one PRB.

The SS (search space) which is a space for retrieving (searching, blind decoding) the EPDCCH in the terminal 200 will be described below. In the terminal 200, the EPDCCH space is configured by the base station 100 and a plurality of ECCEs in the configured EPDCCH space is recognized. In the terminal 200, the SS is configured by the base station 100. For example, in the terminal 200, the ECCE numbers for recognition as the SS are configured by the base station 100.

The SS of the EPDCCH may use either of an UE-specific SS (USS) of the EPDCCH which is configured so as to be specified for the terminal 200, and a common SS (CSS) of the EPDCCH which is defined so as to be specified for the base station 100 (cell). The CSS of the EPDCCH may be commonly used in a plurality of terminals which communicate with the base station 100 (cell).

The SS of the EPDCCH may be independently configured for each EPDCCH set. For example, an ECCE start number may be independently configured for each EPDCCH set. The CSS of the EPDCCH or the USS of the EPDCCH may be independently configured for each EPDCCH set.

In a case of the CSS of the EPDCCH, the ECCE start number may be defined based on information specified for the base station 100 (cell). In the case of the CSS of the EPDCCH, the ECCE start number may be defined in advance. In the case of the CSS of the EPDCCH, the ECCE start number may be defined based on control information received by notification of the base station 100 (cell). In the case of the CSS of the EPDCCH, the ECCE start number may be configured based on an RNTI which is identification information configured by the base station 100 so as to be specified for the terminal 200. The ECCE start number may be configured based on a sub-frame number attached to each sub-frame or a slot number attached to each slot. Thus, the ECCE start number becomes slot-specific information or subframe-specific information. For this reason, the SS of the EPDCCH may be configured so as to be different for each sub-frame or each slot. A rule for recognizing the SS from the ECCE start number may use a predefined method.

The SS for searching for the EPDCCH in the terminal 200 may constitute an SS from one ECCE or more. One EPDCCH or the EPDCCH candidates are constituted by one ECCE or more which have consecutive ECCE numbers. The number of ECCEs constituting the one EPDCCH or the EPDCCH candidates is referred to as an ECCE aggregation level. A set of a plurality of EPDCCH candidates constitutes an SS of each ECCE aggregation level. The number of the EPDCCH candidates may be defined for each ECCE aggregation level. The SS of the EPDCCH may be configured for each ECCE aggregation level. For example, a start ECCE configuring the SS of the EPDCCH may be configured for each ECCE aggregation level.

The base station 100 transmits the EPDCCH by using one ECCE or more among ECCEs configured in the terminal 200. The terminal 200 demodulates and decodes the one EPDCCH candidate or more in the SS and performs processing (blind decoding) for detecting the EPDCCH for the terminal 200. The terminal 200 configures the different SS for each ECCE aggregation level. Then, the terminal 200 performs blind decoding by using the ECCE having a combination which is determined in advance in the SS which is different for each ECCE aggregation level. In other words, the terminal 200 performs blind decoding on each of the EPDCCH candidates in the SS which is different for each ECCE aggregation level (monitors the EPDCCH).

The SS of the EPDCCH may be configured in accordance with a type of a sub-frame and/or a cyclic pre-fix length. A combination of a first ECCE aggregation level and a combination of a second ECCE aggregation level are switched in the SS of the EPDCCH. The combination of the first ECCE aggregation level is a combination of 1, 2, 4, and 8. The combination of the second ECCE aggregation level is a combination of 2, 4, 8, and 16. Thus, in a case where the number of resource elements for transmitting the EPDCCH is changed by the type of a sub-frame and/or the cyclic pre-fix length, communication may be performed without large deterioration of required quality of the EPDCCH. Other ECCE aggregation levels may be used for changing predetermined reception quality of the EPDCCH or an overhead due to the EPDCCH.

<DMRS>

Next, details of the DMRS for a PDSCH and the DMRS for an EPDCCH which are used in this embodiment will be described. The DMRS for a PDSCH and the DMRS for an EPDCCH are also simply referred to as a DMRS below. That is, in the following descriptions, the DMRS includes the DMRS for a PDSCH and the DMRS for an EPDCCH.

In this embodiment, a plurality of DMRSs which are allowed to be independently configured is defined. For example, these DMRSs have different mapping pattern for a DMRS. As an example, a case in which two DMRSs are defined will be described below. However, similar effects may be shown in a case where three DMRSs or more are defined.

A DMRS using a first DMRS pattern (first mapping pattern) is also referred to as a first DMRS below. A DMRS using a second DMRS pattern (second mapping pattern) is also referred to as a second DMRS below.

The first DMRS associated with the PDSCH is also referred to as a first DMRS for a PDSCH below. The second DMRS associated with the PDSCH is also referred to as a second DMRS for a PDSCH below. The first DMRS associated with the EPDCCH is also referred to as a first DMRS for an EPDCCH below. The second DMRS associated with the EPDCCH is also referred to as a second DMRS for an EPDCCH below.

In the following descriptions, the first DMRS includes the first DMRS for a PDSCH and the first DMRS for an EPDCCH. The second DMRS includes the second DMRS for a PDSCH and the second DMRS for an EPDCCH.

In the following descriptions, the DMRS for a PDSCH includes the first DMRS for a PDSCH and the second DMRS for a PDSCH. The DMRS for an EPDCCH includes the first DMRS for an EPDCCH and the second DMRS for an EPDCCH.

Fig. 5 is a diagram illustrating an example of the resource block pair used by the first DMRS. Fig. 5 illustrates a set of resource elements in one resource block pair in a case where the number of OFDM symbols in the one resource block is 7. That is, Fig. 5 illustrates a case where the number of OFDM symbols in one slot is 7. 7 OFDM symbols of the first half of the resource block pair in the time direction are also referred to as a first slot (first resource block). 7 OFDM symbols of the latter half of the resource block pair in the time direction are also referred to as a second slot (second resource block). The OFDM symbols in each of slots (resource blocks) are respectively indicated by OFDM symbol numbers of 0 to 6. Sub-carriers of the resource block pair in the frequency direction are respectively indicated by sub-carrier numbers of 0 to 11. In a case where a plurality of resource blocks constitutes the system bandwidth, the sub-carrier numbers are assigned so as to be different from each other across the system bandwidth. For example, in a case where 6 resource blocks constitute the system bandwidth, sub-carriers to which sub-carrier numbers of 0 to 71 are assigned are used. In the following descriptions, a resource element (k, 1) corresponds to a resource element indicated by a sub-carrier number of k and an OFDM symbol number of l. Resource elements which are shaded in Fig. 5 correspond to resource elements onto which reference signals are mapped.

Resource elements indicated by R0 to R3 respectively represent cell-specific reference signals of the antenna ports 0 to 3. The cell-specific reference signals of the antenna ports 0 to 3 are also referred to as a cell-specific RS (CRS) below. In this example, a case in which the CRS correspond to four antenna ports is described. However, the number of the antenna ports may be changed. For example, the CRS may use one antenna port or two antenna ports. The CRS may be shifted in the frequency direction, based on a cell ID. For example, the CRS may be shifted in the frequency direction, based on a reminder after the cell ID is divided by 6. At this time, a pattern of shifting is 6.

Resource elements indicated by C1 to C4 respectively represent reference signals for channel state measurement (CSI-RSs) of the antenna ports 15 to 22. The resource elements indicated by C1 to C4 respectively represent the CSI-RSs of Code Division Multiplexing (CDM) group 1 to CDM group 4. An orthogonal sequence (orthogonal code) using the Walsh code and a scrambling code using a pseudo-random sequence constitute the CSI-RS. The CSI-RS is subjected to code division multiplexing in the CDM group by using the orthogonal code such as the Walsh code. The CSI-RS is subjected to frequency division multiplexing (FDM) between CDM groups.

A CSI-RS of the antenna ports 15 and 16 is mapped onto C1, a CSI-RS of the antenna ports 17 and 18 is mapped onto C2, a CSI-RS of the antenna ports 19 and 20 is mapped onto C3, and a CSI-RS of the antenna ports 21 and 22 is mapped onto C4.

The number of antenna ports of the CSI-RS is defined to be plural. The CSI-RS may be configured as a reference signal corresponding to 8 antenna ports which are antenna ports 15 to 22. The CSI-RS may be configured as a reference signal corresponding to 4 antenna ports which are antenna ports 15 to 18. The CSI-RS may be configured as a reference signal corresponding to 2 antenna ports which are antenna ports 15 to 16. The CSI-RS may be configured as a reference signal corresponding to one antenna port which is antenna port 15.

The CSI-RS may be mapped onto a portion of the sub-frame. For example, mapping may be performed for each of a plurality of sub-frames. The resource elements onto which the CSI-RS is mapped may be different from resource element illustrated in Fig. 4.

A plurality of mapping patterns for the resource element of the CSI-RS is defined. The base station 100 may configures a plurality of CSI-RSs for the terminal 200.

The CSI-RS may cause transmission power to become zero. The CSI-RS causing the transmission power to become zero is also referred to as a zero-power CSI-RS. The zero-power CSI-RS is configured independently from the CSI-RS for the antenna ports 15 to 22. The CSI-RS for the antenna port 15 to 22 is also referred to as a non-zero power CSI-RS.

The base station 100 configures the CSI-RS as terminal-specific control information for the terminal 200 through RRC signaling. In the terminal 200, the CSI-RS is configured through the RRC signaling by the base station 100. In the terminal 200, a CSI-IM resource which is a resource used for measuring interference power may be configured. The terminal 200 generates feedback information based on a configuration from the base station 100 by using the CRS, the CSI-RS and/or the CSI-IM resource.

White-filled resource elements are spaces in which the PDSCH and/or the EPDCCH are disposed. The PDSCH space and/or the EPDCCH space are mapped onto OFDM symbols which are different from OFDM symbols in the PDCCH space of the sub-frame. In the example of Fig. 4, the number of the OFDM symbols in the PDCCH space is 3 and the PDCCH space is constituted by OFDM symbols of the third OFDM symbol from the leading OFDM symbol in the sub-frame. The PDSCH space and/or the EPDCCH space are constituted by OFDM symbols of the last OFDM symbol from the fourth OFDM symbol in the sub-frame and the number of OFDM symbols in the PDSCH space and/or the EPDCCH space is 11. The PDCCH space, the PDSCH space, and/or the EPDCCH space may be constituted by a configured number of OFDM symbols for each sub-frame. All or some of the PDSCH space and/or the EPDCCH space may be mapped onto predetermined OFDM symbols which has been defined in advance, regardless of the PDCCH space in the sub-frame. The PDSCH space and/or the EPDCCH space may be configured for each resource block pair. The EPDCCH space may be constituted by all OFDM symbols regardless of the number of OFDM symbols in the PDCCH space.

Each of resource elements indicated by D1 to D2 represents the first DMRS of CDM group 1 to CDM group 2. An orthogonal sequence (orthogonal code) using the Walsh code and a scrambling sequence by a pseudo-random sequence constitute the first DMRS. First DMRSs may be independent for each antenna port and be multiplexed in each of the resource block pairs. The first DMRSs have mutually an orthogonality relationship between the antenna port by CDM and/or FDM. The first DMRS is subjected to CDM in the CDM group by using the orthogonal code. The first DMRSs are subjected to FDM between the CDM groups. The first DMRSs in the same CDM group are respectively mapped onto the same resource element. The first DMRSs in the same CDM group use different orthogonal sequences between the antenna ports and these orthogonal sequences have mutually an orthogonality relationship. The first DMRS for a PDSCH may use some or all of 8 antenna ports (antenna ports 7 to 14). That is, MIMO transmission may be performed on the PDSCH associated with the first DMRS maximally up to 8 ranks. The first DMRS for an EPDCCH may use some or all of 4 antenna ports (antenna ports 107 to 110). The first DMRS may change the length of a spreading code in CDM or the number of mapped resource elements in accordance with the rank number of the channel associated with the first DMRS.

A first DMRS pattern (first position) is used in the first DMRS. OFDM symbols having OFDM symbol numbers of 5 and 6 in the first slot and having OFDM symbol numbers of 5 and 6 in the second slot are used for a time direction of the first DMRS pattern. Sub-carriers of CDM group 1 indicated by D1 correspond to sub-carrier numbers of 1, 6, and 11, and sub-carriers of CDM group 2 indicated by D2 correspond to sub-carrier numbers of 0, 5, and 10, in a frequency direction of the first DMRS pattern.

The first DMRS for a PDSCH transmitted by using the antenna ports 7, 8, 11 and, 13 is mapped onto the resource element indicated by D1. The first DMRS for a PDSCH transmitted by using the antenna ports 9, 10, 12 and, 14 is mapped onto the resource element indicated by D2. The first DMRS for an EPDCCH transmitted by using the antenna ports 107 and 108 is mapped onto the resource element indicated by D1. The first DMRS for an EPDCCH transmitted by using the antenna ports 109 and 110 is mapped onto the resource element indicated by D2.

The first DMRS pattern has the following characteristics.

(1) 4 resource elements are used in each of sub-carriers onto which the first DMRSs are mapped. Continuous resource elements in the time direction are used as 2 resource elements of the 4 resource elements.
(2) A resource element different from a resource element onto which the cell-specific reference signal may be mapped is used.
(3) A resource element different from a resource element which may be configured as a PDCCH resource is used.
(4) A portion of a position of resource elements in a certain PRB, onto which the first DMRS is mapped, is the same as a position of resource elements in a certain PRB, onto which the primary synchronization signal and/or the secondary synchronization signal are mapped. In this case, the first DMRS is not disposed in the PRB in which the primary synchronization signal and/or the secondary synchronization signal are arranged.

Effects obtained by the above characteristics are as follows.

(a) The first DMRS may be subjected to CDM with 4 resource elements in the same sub-carrier by using an orthogonal code having a spreading code length of 2 or 4 chips. For this reason, in a terminal, channel estimation may be performed by dispreading the first DMRS which is mapped onto the 4 resource elements in the same sub-carrier. Thus, in the terminal, performing of channel estimation with high accuracy in a sub-carrier unit is enabled. Since the orthogonal code mapped onto continuous resource elements in the time direction causes inter-code interference to be suppressed, deterioration of the reception quality in the terminal is reduced.
(b) The resource element onto which the first DMRS is mapped is different from the resource element onto which the cell-specific reference signal is mapped. For this reason, even though the first DMRS and the cell-specific reference signal are simultaneously mapped in one resource block pair, it is possible to hold reception quality for each of the first DMRS and the cell-specific reference signal.
(c) The resource element onto which the first DMRS is mapped is different from the resource element onto which the PDCCH is mapped. For this reason, even though the first DMRS and the PDCCH are simultaneously mapped in one resource block pair, it is possible to hold reception quality for each of the first DMRS and the PDCCH.

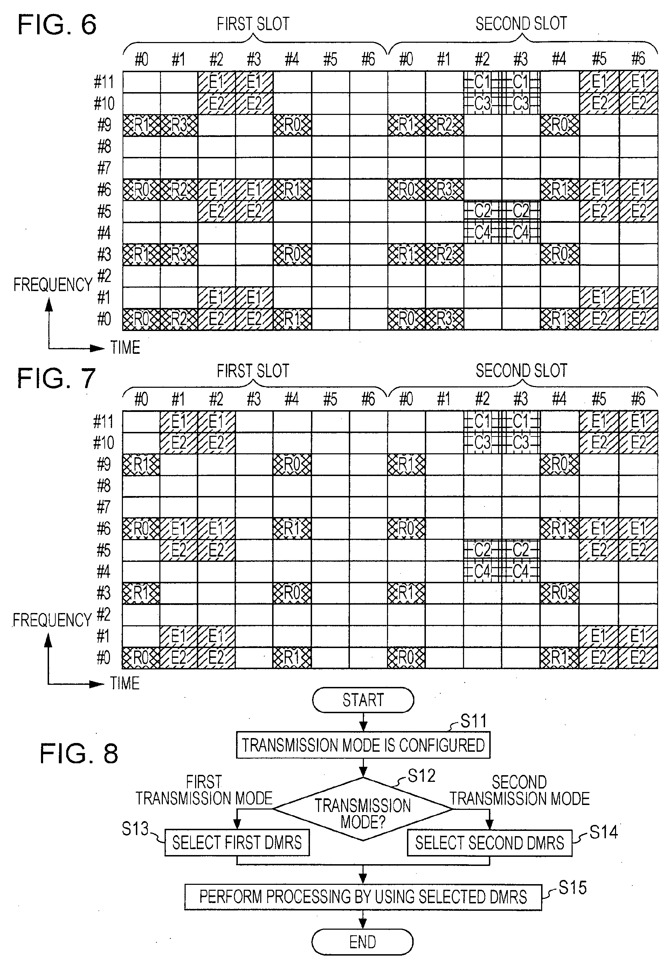

Fig. 6 is a diagram illustrating an example of a resource block pair used by the second DMRS. Fig. 6 illustrates a set of resource elements in one resource block pair in a case where the number of OFDM symbols in the one resource block is 7. That is, Fig. 6 illustrates a case where the number of OFDM symbols in one slot is 7. 7 OFDM symbols of the first half of the resource block pair in the time direction are also referred to as a first slot (first resource block). 7 OFDM symbols of the latter half of the resource block pair in the time direction are also referred to as a second slot (second resource block). The OFDM symbols in each of slots (resource blocks) are respectively indicated by OFDM symbol numbers of 0 to 6. Sub-carriers of the resource block pair in the frequency direction are respectively indicated by sub-carrier numbers of 0 to 11. In a case where a plurality of resource blocks constitutes the system bandwidth, the sub-carrier numbers are assigned so as to be different from each other across the system bandwidth. For example, in a case where 6 resource blocks constitute the system bandwidth, sub-carriers to which sub-carrier numbers of 0 to 71 are assigned are used. Resource elements which are shaded in Fig. 6 correspond to resource elements onto which reference signals are mapped.

Resource elements indicated by R0 to R3 respectively represent cell-specific reference signals of the antenna ports 0 to 3. Resource elements indicated by C1 to C4 represent reference signals for channel state measurement (CSI-RS) of antenna ports 15 to 22. White-filled resource elements are spaces in which the PDSCH and/or the EPDCCH are disposed. The spaces in Fig. 6, in which the cell-specific reference signal, the reference signal for channel state measurement, the PDSCH, and/or the EPDCCH are disposed, are the same as the spaces in Fig. 5, in which the cell-specific reference signal, the reference signal for channel state measurement, the PDSCH, and/or the EPDCCH are disposed. Thus, descriptions will be omitted.

Resource element indicated by E1 to E2 respectively represent second DMRSs of CDM group 1 to CDM group 2. The second DMRS is constituted by using an orthogonal sequence (orthogonal code) using the Walsh code and a scrambling sequence by a pseudo-random sequence. Second DMRSs may be independent for each antenna port and be multiplexed in each of the resource block pairs. The second DMRSs have mutually an orthogonality relationship between the antenna port by CDM and/or FDM. The second DMRS is subjected to the CDM in the CDM group by using the orthogonal code. The second DMRSs are subjected to FDM between the CDM groups. The second DMRSs in the same CDM group are respectively mapped onto the same resource element. The second DMRSs in the same CDM group use different orthogonal sequences between the antenna ports and these orthogonal sequences have mutually an orthogonality relationship. The second DMRS for a PDSCH may use some or all of 8 antenna ports (antenna ports 7A to 14A). That is, MIMO transmission may be performed on the PDSCH associated with the second DMRS maximally up to 8 ranks. The second DMRS for an EPDCCH may use some or all of 4 antenna ports (antenna ports 107A to 110A). The second DMRS may change the length of a spreading code in CDM or the number of mapped resource elements in accordance with the number of ranks of the channel associated with the second DMRS.

A second DMRS pattern (second position) is used in the second DMRS illustrated in Fig. 6. OFDM symbols having OFDM symbol numbers of 2 and 3 in the first slot and having OFDM symbol numbers of 5 and 6 in the second slot are used for a time direction of the second DMRS pattern illustrated in Fig. 6. Sub-carriers of CDM group 1 indicated by D1 correspond to sub-carrier numbers of 1, 6, and 11, and sub-carriers of CDM group 2 indicated by D2 correspond to sub-carrier numbers of 0, 5, and 10, in a frequency direction of the second DMRS pattern illustrated in Fig. 6.

The second DMRS for a PDSCH transmitted by using the antenna ports 7A, 8A, 11A and, 13A is mapped onto the resource element indicated by D1. The second DMRS for a PDSCH transmitted by using the antenna ports 9A, 10A, 12A and, 14A is mapped onto the resource element indicated by D2. The second DMRS for an EPDCCH transmitted by using the antenna ports 107A and 108A is mapped onto the resource element indicated by D1. The second DMRS for an EPDCCH transmitted by using the antenna ports 109A and 110A is mapped onto the resource element indicated by D2.

The second DMRS pattern illustrated in Fig. 6 has the following characteristics.

(1) 4 resource elements are used in each of sub-carriers onto which the second DMRSs are mapped. Continuous resource elements in the time direction are used as 2 resource elements of the 4 resource elements.
(2) A resource element different from a resource element onto which the cell-specific reference signal may be mapped is used.
(3) A resource element different from a resource element onto which the primary synchronization signal or the secondary synchronization signal may be mapped is used.
(4) A portion of a position of resource elements in a certain PRB, onto which the first DMRS is mapped, is the same as a position of resource elements in a certain PRB, onto which the PDCCH, a Physical HARQ Indicator Channel (PHICH), a Physical Control Format Indicator Channel (PCFICH), or the like is mapped.

Effects obtained by the above characteristics are as follows.

(a) The second DMRS may be subjected to CDM with 4 resource elements in the same sub-carrier by using an orthogonal code having a spreading code length of 2 or 4 chips. For this reason, in a terminal, channel estimation may be performed by dispreading the second DMRS which is mapped onto the 4 resource elements in the same sub-carrier. Thus, in the terminal, performing of channel estimation with high accuracy in a sub-carrier unit is enabled. Since the orthogonal code mapped onto continuous resource elements in the time direction causes inter-code interference to be suppressed, deterioration of the reception quality in the terminal is reduced.

(b) The resource element onto which the second DMRS is mapped is different from the resource element onto which the cell-specific reference signal is mapped. For this reason, even though the second DMRS and the cell-specific reference signal are simultaneously mapped in one resource block pair, it is possible to hold reception quality for each of the second DMRS and the cell-specific reference signal.

(c) The resource element onto which the second DMRS is mapped is different from the resource element onto which the primary synchronization signal or the secondary synchronization signal is mapped. For this reason, even though the second DMRS, and the primary synchronization signal and/or the secondary synchronization signal are simultaneously mapped in one resource block pair, it is possible to hold reception quality for each of the second DMRS, and the primary synchronization signal and/or the secondary synchronization signal.

Further, the second DMRS pattern illustrated in Fig. 6 may have some or all of the following characteristics.

(A) The second DMRS is mapped onto a plurality of resource elements which are separate from each other as far as possible in the time direction, in one resource block pair. That is, the first OFDM symbol onto which the second DMRS is mapped corresponds to the first OFDM symbol in the resource block pair except for OFDM symbols onto which the cell-specific reference signal is mapped. The last OFDM symbol onto which the second DMRS is mapped corresponds to the last OFDM symbol in the resource block pair.

(B) The number of OFDM symbols of the PDCCH resource in the resource block pair, the sub-frame, or the cell onto which the second DMRS illustrated in Fig. 6 is mapped is 0, 1, or 2. In a terminal, it is not assumed that a PDCCH resource having the number of OFDM symbols except for 0, 1, or 2 in the resource block pair, the sub-frame, or the cell onto which the second DMRS illustrated in Fig. 6 is mapped is used. Even though a PDCCH resource having the number of OFDM symbols, which is 3 or more, is configured for the terminal, it may be assumed that the terminal using the second DMRS illustrated in Fig. 6 has a PDCCH resource having the number of OFDM symbols, which is 0, 1, or 2.

Effects obtained by the above characteristics are as follows.

(x) A terminal may perform interpolation processing by using the resource element onto which the reference signal is mapped, and estimate a channel for a resource element onto which the reference signal is not mapped. In resource elements (for example, in the example of Fig. 6, resource elements having the OFDM symbol number of 0 and 1 in the first slot) on the outside of the resource element onto which the reference signal is mapped, channel estimation is performed by extrapolation and thus estimation accuracy may be deteriorated. However, the second DMRS is mapped onto a plurality of resource elements which are separate from each other as far as possible in the time direction in one resource block pair, in comparison with the first DMRS. Thus, it is possible to suppress an increase of the number of resource elements for which channel estimation is performed by extrapolation. As a result, it is possible to improve estimation accuracy of overall channels for the resource elements in one resource block pair by using the second DMRS.

(y) There is no probability of collision of the resource element onto which the second DMRS illustrated in Fig. 6 is mapped, with the resource element onto the PDCCH transmitted by using the PDCCH resource having the number of OFDM symbols, which is 3 or more is mapped.

Fig. 7 is a diagram illustrating another example of the resource block pair using the second DMRS. Fig. 7 illustrates a set of resource elements in one resource block pair in a case where the number of OFDM symbols in the one resource block is 7. That is, Fig. 7 illustrates a case where the number of OFDM symbols in one slot is 7. 7 OFDM symbols of the first half of the resource block pair in the time direction are also referred to as a first slot (first resource block). 7 OFDM symbols of the latter half of the resource block pair in the time direction are also referred to as a second slot (second resource block). The OFDM symbols in each of slots (resource blocks) are respectively indicated by OFDM symbol numbers of 0 to 6. Sub-carriers of the resource block pair in the frequency direction are respectively indicated by sub-carrier numbers of 0 to 11. In a case where a plurality of resource blocks constitutes the system bandwidth, the sub-carrier numbers are assigned so as to be different from each other across the system bandwidth. For example, in a case where 6 resource blocks constitute the system bandwidth, sub-carriers to which sub-carrier numbers of 0 to 71 are assigned are used. Resource elements which are shaded in Fig. 7 correspond to resource elements onto which reference signals are mapped.

Resource elements indicated by R0 to R1 respectively represent cell-specific reference signals of the antenna ports 0 to 1. Resource elements indicated by C1 to C4 represent reference signals for channel state measurement (CSI-RS) of antenna ports 15 to 22. White-filled resource elements are spaces in which the PDSCH and/or the EPDCCH are disposed. The spaces in Fig. 7, in which the cell-specific reference signal, the reference signal for channel state measurement, the PDSCH, and/or the EPDCCH are disposed, are the same as the spaces in Fig. 5, in which the cell-specific reference signal, the reference signal for channel state measurement, the PDSCH, and/or the EPDCCH are disposed. Thus, descriptions will be omitted. However, in one sub-frame, a starting position of the EPDCCH may be configured so as to be independent from a starting position of the PDSCH.

Resource element indicated by E1 to E2 respectively represent second DMRSs of CDM group 1 to CDM group 2. The second DMRS is constituted by using an orthogonal sequence (orthogonal code) using the Walsh code and a scrambling sequence by a pseudo-random sequence. The second DMRSs may be independent for each antenna port and be multiplexed in each of the resource block pairs. The second DMRSs have mutually an orthogonality relationship between the antenna port by CDM and/or FDM. The second DMRS is subjected to CDM in the CDM group by using the orthogonal code. The second DMRSs are subjected to FDM between the CDM groups. The second DMRSs in the same CDM group are respectively mapped onto the same resource element. The second DMRSs in the same CDM group use different orthogonal sequences between the antenna ports and these orthogonal sequences have mutually an orthogonality relationship. The second DMRS for a PDSCH may use some or all of 8 antenna ports (antenna ports 7A to 14A). That is, MIMO transmission may be performed on the PDSCH associated with the second DMRS maximally up to 8 ranks. The second DMRS for an EPDCCH may use some or all of 4 antenna ports (antenna ports 107A to 110A). The second DMRS may change the length of a spreading code in CDM or the number of mapped resource elements in accordance with the number of ranks of the channel associated with the second DMRS.

A second DMRS pattern (second position) illustrated in Fig. 7 is used in the second DMRS illustrated in Fig. 7. OFDM symbols having OFDM symbol numbers of 1 and 2 in the first slot and having OFDM symbol numbers of 5 and 6 in the second slot are used for a time direction of the second DMRS pattern illustrated in Fig. 7. Sub-carriers of CDM group 1 indicated by D1 correspond to sub-carrier numbers of 1, 6, and 11, and sub-carriers of CDM group 2 indicated by D2 correspond to sub-carrier numbers of 0, 5, and 10, in a frequency direction of the second DMRS pattern illustrated in Fig. 7.

The second DMRS for a PDSCH transmitted by using the antenna ports 7A, 8A, 11A and, 13A is mapped onto the resource element indicated by D1. The second DMRS for a PDSCH transmitted by using the antenna ports 9A, 10A, 12A and, 14A is mapped onto the resource element indicated by D2. The second DMRS for an EPDCCH transmitted by using the antenna ports 107A and 108A is mapped onto the resource element indicated by D1. The second DMRS for an EPDCCH transmitted by using the antenna ports 109A and 110A is mapped onto the resource element indicated by D2.

The second DMRS pattern illustrated in Fig. 7 has the following characteristics.

(1) 4 resource elements are used in each of sub-carriers onto which the second DMRSs are mapped. Continuous resource elements in the time direction are used as 2 resource elements of the 4 resource elements.
(2) A resource element different from a resource element onto which the cell-specific reference signal may be mapped is used.
(3) A resource element different from a resource element onto which the primary synchronization signal or the secondary synchronization signal may be mapped is used.
(4) A portion of a position of resource elements in a certain PRB, onto which the first DMRS is mapped, is the same as a position of resource elements in a certain PRB, onto which the PDCCH, the PHICH, the PCFICH, or the like is mapped.

Effects obtained by the above characteristics are as follows.

(a) The second DMRS may be subjected to CDM with 4 resource elements in the same sub-carrier by using an orthogonal code having a spreading code length of 2 or 4 chips. For this reason, in a terminal, channel estimation may be performed by dispreading the second DMRS which is mapped onto the 4 resource elements in the same sub-carrier. Thus, in the terminal, performing of channel estimation with high accuracy in a sub-carrier unit is enabled. Since the orthogonal code mapped onto continuous resource elements in the time direction causes inter-code interference to be suppressed, deterioration of the reception quality in the terminal is reduced.
(b) The resource element onto which the second DMRS is mapped is different from the resource element onto which the cell-specific reference signal is mapped. For this reason, even though the second DMRS and the cell-specific reference signal are simultaneously mapped in one resource block pair, it is possible to hold reception quality for each of the second DMRS and the cell-specific reference signal.
(c) The resource element onto which the second DMRS is mapped is different from the resource element onto which the primary synchronization signal or the secondary synchronization signal is mapped. For this reason, even though the second DMRS, and the primary synchronization signal and/or the secondary synchronization signal are simultaneously mapped in one resource block pair, it is possible to hold reception quality for each of the second DMRS, and the primary synchronization signal and/or the secondary synchronization signal.

Further, the second DMRS pattern illustrated in Fig. 7 may have some or all of the following characteristics.

(A) The second DMRS is mapped onto a plurality of resource elements which are separate from each other as far as possible in the time direction, in one resource block pair. That is, the first OFDM symbol onto which the second DMRS is mapped corresponds to the first OFDM symbol in the resource block pair except for OFDM symbols onto which the cell-specific reference signal is mapped. The last OFDM symbol onto which the second DMRS is mapped corresponds to the last OFDM symbol in the resource block pair.
(B) The number of OFDM symbols of the PDCCH resource in the resource block pair, the sub-frame, or the cell onto which the second DMRS illustrated in Fig. 7 is mapped is 0 or 1. In a terminal, it is not assumed that a PDCCH resource having the number of OFDM symbols except for 0 or 1 in the resource block pair, the sub-frame, or the cell onto which the second DMRS illustrated in Fig. 7 is mapped is used. Even though a PDCCH resource having the number of OFDM symbols, which is 2 or more, is configured for the terminal, it may be assumed that the terminal using the second DMRS illustrated in Fig. 7 has a PDCCH resource having the number of OFDM symbols, which is 0 or 1.
(C) The cell-specific reference signal of the antenna port 2 or 3 is not mapped onto which the resource block pair, the sub-frame, or the cell onto which the second DMRS illustrated in Fig. 7 is mapped. That is, the number of antenna ports of the cell-specific reference signal allowed to be used in the resource block pair, the sub-frame, or the cell onto which the second DMRS illustrated in Fig. 7 is mapped is 1 or 2. In the terminal, it is not assumed that the cell-specific reference signal of the number of antenna ports except for 1 or 2 is used in the resource block pair, the sub-frame, or the cell onto which the second DMRS illustrated in Fig. 7 is mapped.

Effects obtained by the above characteristics are as follows.

(x) A terminal may perform interpolation processing by using the resource element onto which the reference signal is mapped, and estimate a channel for a resource element onto which the reference signal is not mapped. In a resource element (for example, in the example of Fig. 7, a resource element having the OFDM symbol number of 0 in the first slot) on the outside of the resource element onto which the reference signal is mapped, channel estimation is performed by extrapolation and thus estimation accuracy may be deteriorated. However, the second DMRS is mapped onto a plurality of resource elements which are separate from each other as far as possible in the time direction in one resource block pair. Thus, it is possible to suppress an increase of the number of resource elements for which channel estimation is performed by extrapolation. As a result, it is possible to improve estimation accuracy of overall channels for the resource elements in one resource block pair by using the second DMRS.
(y) There is no probability of collision of the resource element onto which the second DMRS illustrated in Fig. 7 is mapped, with the resource element onto which the PDCCH transmitted by using the PDCCH resource having the number of OFDM symbols, which is 2 or more is mapped. Thus, the effect described as the above effect (x) is improved.
(z) There is no probability of collision of the resource element onto which the second DMRS illustrated in Fig. 7 is mapped, with the resource element onto which the cell-specific reference signal of the antenna port 2 or 3 is mapped. Thus, the effect described as the above effect (x) is improved.

The second DMRS pattern which is described above may have some or all of the following characteristics.

(1) A resource element having OFDM symbols different from OFDM symbols onto which the primary synchronization signal or the secondary synchronization signal may be mapped is used. The primary synchronization signal or the secondary synchronization signal is used in TDD.
(2) A resource element having OFDM symbols different from OFDM symbols onto which the primary synchronization signal or the secondary synchronization signal may be mapped is used. The primary synchronization signal or the secondary synchronization signal is used in FDD.
(3) A resource element different from a resource element onto the CSI-RS may be mapped is used.

Effects obtained by the above characteristics are as follows.

(a) The resource element onto which the second DMRS is mapped is different from the resource element onto which the primary synchronization signal or the secondary synchronization signal used in TDD is mapped. For this reason, even though the second DMRS, and the primary synchronization signal and/or the secondary synchronization signal used in TDD are simultaneously mapped in one resource block pair, it is possible to hold reception quality for each of the second DMRS, and the primary synchronization signal and/or the secondary synchronization signal.

(b) The resource element onto which the second DMRS is mapped is different from the resource element onto which the primary synchronization signal or the secondary synchronization signal used in FDD is mapped. For this reason, even though the second DMRS, and the primary synchronization signal and/or the secondary synchronization signal used in FDD are simultaneously mapped in one resource block pair, it is possible to hold reception quality for each of the second DMRS, and the primary synchronization signal and/or the secondary synchronization signal.

(c) The resource element onto which the second DMRS is mapped is different from the resource element onto which the CSI-RS is mapped. For this reason, even though the second DMRS and the CSI-RS are simultaneously mapped in one resource block pair, it is possible to hold reception quality for each of the second DMRS and the CSI-RS.

An example of a complex demodulation symbol $a_{k,l}^{(p)}$ in the first DMRS and the second DMRS is represented by Expression (1).

[Expression 1]

$$a_{k,l}^{(p)} = w_p(l') \cdot r(3 \cdot l' \cdot N_{RB}^{max,DL} + 3 \cdot n_{PRB} + m')$$

$$w_p(i) = \begin{cases} \overline{w}_p(i) & (m'+n_{PRB}) \bmod 2 = 0 \\ \overline{w}_p(3-i) & (m'+n_{PRB}) \bmod 2 = 1 \end{cases}$$

$$k = 5m' + N_{sc}^{RB} n_{PRB} + k'$$

$$k' = \begin{cases} 1 & p \in \{7,8,11,13,7A,8A,11A,13A,107,108,111,113,107A,108A,111A,113A\} \\ 0 & p \in \{9,10,12,14,9A,10A,12A,14A,109,110,112,114,109A,110A,112A,114A\} \end{cases}$$

$$l = l'' \bmod 2 + x + y \lfloor l''/2 \rfloor$$

$$l'' = \begin{cases} 0,1 & \text{if } n_s \bmod 2 = 0 \\ 2,3 & \text{if } n_s \bmod 2 = 1 \end{cases}$$

$$m' = 0,1,2$$

Here, k indicates the sub-carrier number in the system bandwidth, and l indicates the OFDM symbol number in the slot. p indicates the antenna port number. $a_{k,l}^{(p)}$ indicates a complex demodulation symbol of an antenna port p, which is mapped onto a resource element of a sub-carrier of k and an OFDM symbol of l. Wp(i) indicates an orthogonal sequence of 4 chips for the antenna port p, and i indicates an index of the orthogonal sequence. $n_{PRB}$ indicates a physical resource block number in the system bandwidth. $N_{RB}^{max,DL}$ indicates the maximum value of resource blocks in a downlink, for example, the maximum value is 110. $N_{sc}^{RB}$ indicates the number of sub-carriers constituting one resource block, for example, indicates 12. $n_s$ indicates a slot number in a radio frame. r(m) indicates a pseudo-random sequence, and m indicates an index of the pseudo-random sequence.

In Expression (1), x and y indicate values for generating the DMRS and indicate values which are configured or defined for the first DMRS or the second DMRS. A mapping pattern of the first DMRS or the second DMRS is determined based on x and y. For example, in the first DMRS illustrated in Fig. 5, x is 5 and y is 0. In the second DMRS illustrated in Fig. 6, x is 2 and y is 3. In the second DMRS illustrated in Fig. 7, x is 1 and y is 4.

That is, the first DMRS or the second DMRS may be determined based on the values for generating the DMRS. In the example represented by Expression (1), the values for generating the DMRS are used for determining an index of an OFDM symbol mapped onto the DMRS. However, it is not limited thereto. For example, the values for generating the DMRS may be used for determining an index of a sub-carrier mapped onto the DMRS, an index of the orthogonal sequence, or an index of the pseudo-random sequence. In a case where the first DMRS and the second DMRS are switched and used, the values for generating the DMRS may be configured by switching the values. That is, in the first DMRS and the second DMRS, an expression for generating the DMRS is the same and a value (parameter) used in the expression is different. Thus, in the base station 100 and the terminal 200 generating the first DMRS and the second DMRS, it is possible to reduce processing and storage capacity for generating these DMRSs.

Hitherto, the first DMRS and the second DMRS are described. The base station 100 and the terminal 200 may use the switched first DMRS and second DMRS. Next, a criterion of switching will be described.

As one example, switching may be performed in accordance with a transmission mode.

The transmission mode is information indicating a transmission method for the base station 100 communicating with the terminal 200. The transmission mode is defined in advance as Transmission Modes 1 to 11. The transmission mode is configured in the terminal 200 through RRC signaling from the base station 100. The transmission mode defines the corresponding DCI format. That is, the terminal 200 determines a DCI format of a control channel performing monitoring, based on the transmission mode configured by the base station 100.

Transmission Mode 1 corresponds to a transmission mode using a single antenna port transmission scheme through the antenna port 0. Transmission Mode 2 corresponds to a transmission mode using a transmission diversity scheme. Transmission Mode 3 corresponds to a transmission mode using a cyclic delay diversity scheme. Transmission Mode 4 corresponds to a transmission mode using a closed-loop spatial multiplexing scheme. Transmission Mode 5 corresponds to a transmission mode using a multi-user MIMO scheme. Transmission Mode 6 corresponds to a transmission mode using a closed-loop spatial multiplexing scheme through the single antenna port. Transmission Mode 7 corresponds to a transmission mode using a single antenna port transmission scheme through the antenna port 5. Transmission Mode 8 corresponds to a transmission mode using a closed-loop spatial multiplexing scheme through the antenna ports 7 to 8. Transmission Mode 9 corresponds to a transmission mode using a closed-loop spatial multiplexing scheme through the antenna ports 7 to 14.

Transmission Mode 10 corresponds to a transmission mode using a closed-loop spatial multiplexing scheme through the antenna ports 7 to 14. Transmission Mode 10 corresponds to a transmission mode in which notification of a plurality of CSI-RSs and feedback information using the CSI-RSs is enabled. For example, Transmission Mode 10 may be a transmission mode in which the CoMP communication is enabled. Transmission Mode 10 is also referred to as a first transmission mode. The first transmission mode may include some or all of Transmission Modes 1 to 9 in addition to Transmission Mode 10. For example, the first transmission mode may represent Transmission Modes 8, 9, and 10.

Transmission Mode 11 corresponds to a transmission mode different from Transmission Modes 1 to 10. Transmission Mode 11 may include some or all of functions allowed to be performed in Transmission Mode 10. Transmission Mode 11 may correspond to a transmission mode using a closed-loop spatial multiplexing scheme through the antenna ports 7 to 14. Transmission Mode 11 may correspond to a transmission mode in which configuring of a flexible sub-frame is enabled. The flexible sub-frame allows an uplink sub-frame and a downlink sub-frame to be flexibly switched in the Time Division Duplexing (TDD) method.

Transmission Mode 11 is also referred to as a second transmission mode.

In this manner, switching may be performed in accordance with the transmission mode (for example, Transmission Mode 11 or transmission modes other than Transmission Mode 11).

As another one example, switching may be performed in accordance with a configuration of an EPDCCH.

The configuration of an EPDCCH includes an EPDCCH sub-frame configuration (configuration of a sub-frame for monitoring an EPDCCH), an EPDCCH starting symbol configuration, an EPDCCH-PRB set ID configuration (configuration of an index changing depending on an EPDCCH-PRB set), an EPDCCH transmission type configuration, an EPDCCH resource block assignment configuration, an EPDCCH scrambling sequence initial configuration (configuration of a parameter for initializing a scrambling sequence of the DMRS for an EPDCCH), a PUCCH offset configuration, resource element mapping, a pseudo-collocation configuration, and the like.

For example, what number of an OFDM symbol is the first OFDM symbol onto which an EPDCCH is mapped in a sub-frame is configured by using the EPDCCH starting symbol configuration. As the first OFDM symbol onto which the EPDCCH is mapped, any one of OFDM symbols from OFDM symbol #0 (first OFDM symbol) to OFDM symbol #4 (fifth OFDM symbol) is configured. Switching may be performed in accordance with whether the first OFDM symbol onto which the EPDCCH is mapped is ahead of a predetermined OFDM symbol or is subsequent to the predetermined OFDM symbol. In an extreme example, switching may be performed in accordance with whether the first OFDM symbol onto which the EPDCCH is mapped is the first OFDM symbol in a sub-frame or is an OFDM symbol other than the first OFDM symbol in a sub-frame.

In addition, the number of ports of the CRS considering a case where an EPDCCH is mapped in a sub-frame is configured by using, for example, the resource element mapping and the pseudo-collocation configuration. As the number of ports of the CRS considering a case where an EPDCCH is mapped, any of 0, 1, 2, and 4 is configured. Switching may be performed in accordance with whether the number of ports of the CRS considering a case where an EPDCCH is mapped is less than a predetermined number or is equal to or greater than the predetermined number. In an extreme example, switching may be performed in accordance with whether the number of ports of the CRS considering a case where an EPDCCH is mapped is 0 or values other than 0.

In addition, a transmission type of an EPDCCH is configured by using, for example, the EPDCCH transmission type configuration. As the transmission type of an EPDCCH, either of distributed transmission and localized transmission is configured. In distributed transmission, one EPDCCH is mapped onto EREGs in a plurality of PRBs, and thus it is possible to obtain the frequency diversity effect. In localized transmission, one EPDCCH is mapped onto EREGs in one PRB (or a few PRBs), and thus it is possible to perform transmission and reception using a frequency which has good channel characteristics. Switching may be performed in accordance with whether the transmission type of an EPDCCH is the distributed transmission or the localized transmission.

In this manner, switching may be performed in accordance with a configuration of an EPDCCH.

As another one example, switching may be performed in accordance with a type of the search space.

As a type of the search space in which an EPDCCH is disposed, there are a common search space (cell-specific search space) and a terminal-specific search space. In the common search space (CSS), an EPDCCH to (in) which control information read by a plurality of terminals is assigned (included), or an EPDCCH to (in) which a downlink/uplink grant indicating an instruction of fallback to a lower transmission scheme, random access, or transmission power control is assigned (included) may be disposed. The control information includes the system information, information regarding paging, or the like. Further specifically, in the CSS, an EPDCCH obtained by adding a CRC scrambled by an identifier for the system information (SI-RNTI; System Information-Radio Network Temporary Identifier), an identifier for paging (P-RNTI; Paging-RNTI), an identifier for random access (RA-RNTI; Random Access-RNTI), or a transmission power control identifier (TPC-RNTI) may be disposed. It is impossible to dispose an EPDCCH to which the CRC scrambled by these identifiers is added, in the terminal-specific search space (USS; UE-specific SS). These identifiers are identifiers of which one identifier is assigned to one terminal or more (including a plurality of terminals). One terminal or more may perform reception processing on a PDCCH to which the CRC scrambled by these identifier. An EPDCCH to which a CRC scrambled by the terminal-specific identifier such as a Cell-RNTI (C-RNTI), a Semi Persistent Scheduling-C-RNTI (SPS-C-RNTI), and a Temporaly C-RNTI is added is disposed in the CSS and in the USS. Here, one terminal-specific identifier is assigned to one terminal.

In this manner, switching may be performed in accordance with a type of the search space (common search space or terminal-specific search space).

In addition, as another one example, switching may be performed in accordance with explicit signaling (instruction/configuration regarding which type of a search space is used). As explicit signaling, quasi-static signaling such as dedicated RRC signaling and dedicated MAC signaling, dynamic signaling using a predetermined field in the DCI format, or the like may be used.

Hitherto, a criterion of switching is described. Next, a specific example in which the base station 100 and the terminal 200 switch and use the first DMRS (DMRS using the first DMRS pattern) and the second DMRS (DMRS using the second DMRS pattern) in accordance with the above-described criteria will be described.

The base station 100 and the terminal 200 may switch and use the first DMRS and the second DMRS. The base station 100 and the terminal 200 select the first DMRS or the second DMRS associated with a channel for the terminal 200 by using a predetermined method. The base station 100 maps the channel for the terminal 200 and the selected first DMRS or second DMRS onto a portion or the entirety of one resource block pair or more, and transmits a result of mapping to the terminal 200. The terminal 200 receives the channel for the terminal 200 transmitted from the base station 100, and the DMRS associated with the channel, and performs processing on the channel by using the received DMRS. At this time, in the terminal 200, it is assumed that the DMRS is the selected first DMRS or second DMRS. The processing on the channel includes various types of processing performed on the channel. For example, the processing on the channel includes demodulation processing, decoding processing, channel estimation processing, detection processing, and the like.

Various methods may be used in switching (selection) of the first DMRS and the second DMRS in the base station 100 and the terminal 200.

An example of a switching (selection) method of the first DMRS and the second DMRS in the base station 100 and the terminal 200 will be described. In this example, the base station 100 and the terminal 200 switch the DMRS used in processing on the channel, in accordance with the transmission mode which is configured for the terminal 200 by the base station 100.

In a case where the transmission mode which is configured for the terminal 200 by the base station 100 is the first transmission mode, the base station 100 selects the first DMRS as the DMRS associated with the channel for the terminal 200. In a case where the transmission mode which is configured for the terminal 200 by the base station 100 is the second transmission mode, the base station 100 selects the second DMRS as the DMRS associated with the channel for the terminal 200. The base station 100 maps the selected first DMRS or second DMRS, and the channel associated with the selected DMRS onto a predetermined resource block pair, and transmits a result of mapping to the terminal 200.

In the case where the transmission mode which is configured for the terminal 200 by the base station 100 is the first transmission mode, the terminal 200 selects the first DMRS as the DMRS associated with the channel transmitted from the base station 100. In the case where the transmission mode which is configured for the terminal 200 by the base station 100 is the second transmission mode, the terminal 200 selects the second DMRS as the DMRS associated with the channel transmitted from the base station 100. The terminal 200 demaps the selected first DMRS or second DMRS, and the channel associated with the selected DMRS from a predetermined resource block pair. The terminal 200 performs processing on the channel in the resource block pair onto the selected DMRS is mapped, by using the selected first DMRS or second DMRS.

Fig. 8 is a diagram illustrating a flowchart of a terminal using an example of the selection method of the first DMRS and the second DMRS. In this example, switching (selection) of the first DMRS and the second DMRS is performed in accordance with the transmission mode configured for the terminal 200 by the base station 100, in the base station 100 and the terminal 200.

In Step S11, a transmission mode is configured in the terminal 200 through RRC signaling by the base station 100. In Step S12, the terminal 200 distinguishes the transmission mode configured by the base station 100 between the first transmission mode and the second transmission mode. In a case where the transmission mode configured by the base station 100 is the first transmission mode, in Step S13, the terminal 200 selects the first DMRS as the DMRS used in processing on the channel. In a case where the transmission mode configured by the base station 100 is the second transmission mode, in Step S14, the terminal 200 selects the second DMRS as the DMRS used in processing on the channel. In Step S15, the terminal 200 performs processing on the channel by using the selected DMRS.

The base station 100 performs adaptive switching between the first DMRS and the second DMRS for the terminal 200 by using the above-described method. Switching between the first DMRS and the second DMRS causes different characteristics or effects of these DMRS from each other to be switched. For example, a terminal supporting the first DMRS and the second DMRS is configured so as to select the first DMRS, and thus the terminal and another terminal which supports only the first DMRS can share the DMRS mapped onto the same resource block pair. For example, in a case where the terminal supporting the first DMRS and the second DMRS, and another terminal supporting only the first DMRS do not share the DMRS mapped onto the same resource block pair, the terminal supporting the first DMRS and the second DMRS is configured so as to select the second DMRS, and thus estimation accuracy of a channel in the terminal may be improved. The switching is performed in accordance with the transmission mode configured for the terminal 200 by the base station 100, and thus it is possible to reduce overhead of control information for designating the switching.

Another example of the switching (selection) method of the first DMRS and the second DMRS in the base station 100 and the terminal 200 will be described. In this example, the base station 100 and the terminal 200 switch the DMRS used in processing on a channel in accordance with whether or not the second DMRS is configured for the terminal 200 by the base station 100. The base station 100 and the terminal 200 may switch the DMRS used in processing on a channel in accordance with designation obtained by the base station 100 designating the first DMRS or the second DMRS for the terminal 200.

Configuring of the second DMRS for the terminal 200 by the base station 100 is performed through RRC signaling. The second DMRS is configured so as to be specified for the terminal 200. For example, the second DMRS may be configured by using a parameter which is called as DM-RS-Config-r12. For example, in a case where a configuration of the second DMRS has been setup, a state where the second DMRS is configured occurs. In a case where the configuration of the second DMRS does not have been setup or in a case where a case where the configuration of the second DMRS has been released, a state where the second DMRS is not configured occurs. For example, in a case where the configuration of the second DMRS corresponds to 1 or True, the state where the second DMRS is configured occurs. In a case where the configuration of the second DMRS corresponds to 0 or False, the state where the second DMRS is not configured occurs.

In the case where the base station 100 does not configure the second DMRS for the terminal 200, the base station 100 selects the first DMRS as the DMRS associated with a channel for the terminal 200. In the case where the base station 100 configures the second DMRS for the terminal 200, the base station 100 selects the second DMRS as the DMRS associated with a channel for the terminal 200. The base station 100 maps the selected first DMRS or second DMRS, and the channel associated with the DMRS onto a predetermined resource block pair, and transmits a result of mapping to the terminal 200.

In the case where the second DMRS is not configured for the terminal 200 by the base station 100, the terminal 200 selects the first DMRS as the DMRS associated with a channel transmitted from the base station 100. In the case where the second DMRS is not configured for the terminal 200 by the base station 100, the terminal 200 selects the second DMRS as the DMRS associated with a channel transmitted from the base station 100. The terminal 200 demaps the selected first DMRS or second DMRS, and the channel associated with the DMRS from a predetermined resource block pair. The terminal 200 performs processing on the channel in the resource block pair onto which the DMRS is mapped, by using the selected first DMRS or second DMRS.

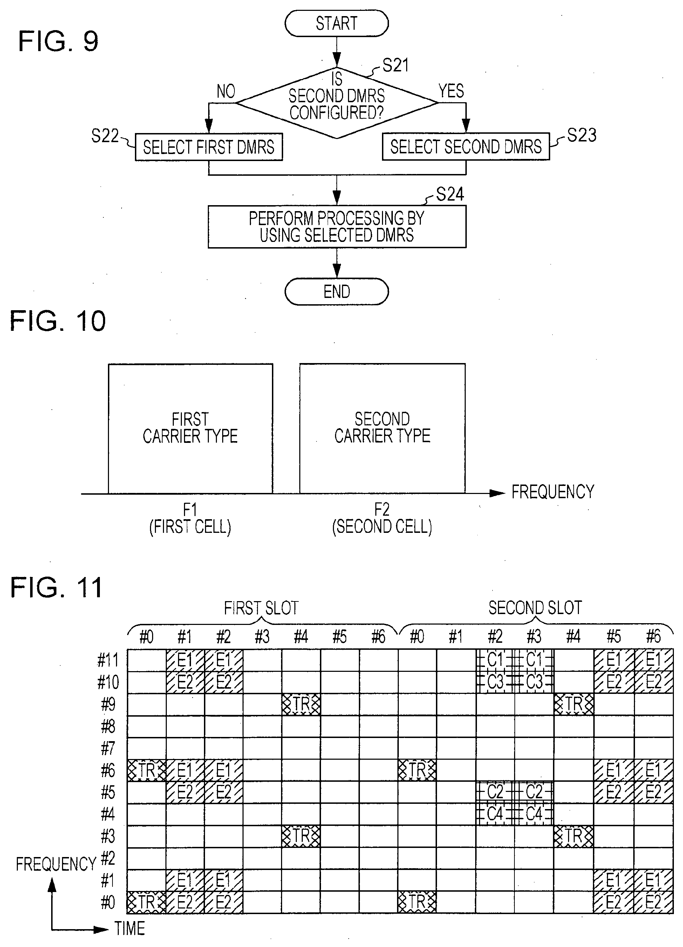

Fig. 9 is a diagram illustrating a flowchart of a terminal using another example of the selection method of the first DMRS and the second DMRS. In this example, switching (selection) of the first DMRS and the second DMRS in the base station 100 and the terminal 200 is performed in accordance with whether or not the second DMRS is configured for the terminal 200 by the base station 100.

In Step S21, the terminal 200 recognizes whether or not the second DMRS is configured by the base station 100. In a case where the second DMRS is not configured by the base station 100, in Step S22, the terminal 200 selects the first DMRS. In a case where the second DMRS is configured by the base station 100, in Step S23, the terminal 200 selects the second DMRS. In Step S24, the terminal 200 performs processing on a channel by using the selected DMRS.

The base station 100 performs adaptive switching between the first DMRS and the second DMRS for the terminal 200 by using the above-described method. Switching between the first DMRS and the second DMRS causes different characteristics or effects of these DMRS from each other to be switched. For example, a terminal supporting the first DMRS and the second DMRS is configured so as to select the first DMRS, and thus the terminal and another terminal which supports only the first DMRS can share the DMRS mapped onto the same resource block pair. For example, in a case where the terminal supporting the first DMRS and the second DMRS, and another terminal supporting only the first DMRS do not share the DMRS mapped onto the same resource block pair, the terminal supporting the first DMRS and the second DMRS is configured so as to select the second DMRS, and thus estimation accuracy of a channel in the terminal may be improved. The switching is performed in accordance with whether or not the second DMRS is configured for the terminal 200 by the base station 100, and thus it is possible to cause the switching to be configured independently from other configuration information including the transmission mode and the like. For this reason, it is possible to cause the base station 100 to flexibly configure the second DMRS for the terminal 200, and to realize flexible scheduling.

Another example of the switching (selection) method of the first DMRS and the second DMRS in the base station 100 and the terminal 200 will be described. In this example, the base station 100 and the terminal 200 switch the DMRS for a PDSCH and/or the DMRS for an EPDCCH in accordance with other configurations for the EPDCCH.

The base station 100 and the terminal 200 may switch the DMRS for a PDSCH and/or the DMRS for an EPDCCH in accordance with a configuration relating to a starting symbol, which is included in a configuration relating to an EPDCCH. The configuration relating to a starting symbol indicates an OFDM symbol starting for the EPDCCH and a PDSCH scheduled by the EPDCCH, in a resource block pair.

For example, in a case where some or all of resource elements onto which the second DMRS is mapped are not included in resource elements of a resource configured by the starting symbol, the base station 100 and the terminal 200 use the first DMRS in processing on the PDSCH and/or the EPDCCH. In a case where some or all of the resource elements onto which the second DMRS is mapped are not included in the resource elements of the resource configured by the starting symbol, the base station 100 and the terminal 200 use the second DMRS in processing on the PDSCH and/or the EPDCCH.

Another example of the switching (selection) method of the first DMRS for an EPDCCH and the second DMRS for an EPDCCH in the base station 100 and the terminal 200 will be described. In this example, the base station 100 and the terminal 200 cause a configuration relating to the DMRS to be included in a configuration relating to an EPDCCH which is configured for the terminal 200 by the base station 100, and switch the DMRS used in processing on an EPDCCH in accordance with the configuration.

For example, the configuration relating to an EPDCCH may include information indicating whether or not the DMRS used in processing on the EPDCCH is the second DMRS. The configuration relating to an EPDCCH may include information for designating whether the DMRS used in processing on the EPDCCH is the first DMRS or the second DMRS.

In a case where the base station 100 configures a plurality of EPDCCH sets for the terminal 200, the DMRS for an EPDCCH may be independently configured or defined for each EPDCCH set. Thus, a configuration relating to the DMRS for an EPDCCH may be flexibly performed. In a case where the base station 100 configures a plurality of EPDCCH sets for the terminal 200, the configuration relating to the DMRS for an EPDCCH may also be the same as some or all of the configured EPDCCH set. Thus, it is possible to reduce overhead of information of the configuration relating to the DMRS for an EPDCCH.

Another example of the switching (selection) method of the first DMRS for an EPDCCH and the second DMRS for an EPDCCH in the base station 100 and the terminal 200 will be described. In this example, the base station 100 and the terminal 200 switch the DMRS for an EPDCCH in accordance with other configurations for the EPDCCH set.

The configuration relating to an EPDCCH which is configured for each EPDCCH set by the base station 100 for the terminal 200 may include information indicating that the EPDCCH set corresponds to distributed transmission or localized transmission. The base station 100 and the terminal 200 may switch the DMRS for an EPDCCH in accordance with distributed transmission or localized transmission of the EPDCCH set.

For example, in a case where the EPDCCH set corresponds to distributed transmission, the base station 100 and the terminal 200 use the first DMRS in processing on an EPDCCH in the EPDCCH set. In a case where the EPDCCH set corresponds to localized transmission, the base station 100 and the terminal 200 use the second DMRS in processing on an EPDCCH in the EPDCCH set.

Here, in the case where the EPDCCH set corresponds to distributed transmission, the DMRS used in processing on an EPDCCH in the EPDCCH set may be shared to a plurality of terminals. In the case where the EPDCCH set corresponds to localized transmission, there is no probability of that the DMRS used in processing on an EPDCCH in the EPDCCH set is shared to a plurality of terminals. For this reason, effects by each of the DMRS are improved by using the above-described method.

Another example of the switching (selection) method of the first DMRS for an EPDCCH and the second DMRS for an EPDCCH in the base station 100 and the terminal 200 will be described. In this example, the base station 100 and the terminal 200 switch the DMRS for an EPDCCH in accordance with other configurations for the EPDCCH.

The base station 100 and the terminal 200 may switch the DMRS for an EPDCCH in accordance with the search space of the monitored EPDCCH. The search space includes a terminal-specific search space and a cell-specific search space.

For example, in a case where the monitored EPDCCH is the cell-specific search space, the base station 100 and the terminal 200 use the first DMRS in processing on the EPDCCH. In a case where the EPDCCH set is the terminal-specific search space, the base station 100 and the terminal 200 use the second DMRS in processing on the EPDCCH.

Here, the terminal-specific search space is a search space in the EPDCCH set configured so as to be specified for the terminal 200, by the base station 100. The cell-specific search space is a search space in the EPDCCH set which is specified for the base station 100, and may be shared to a terminal which is connected to the base station 100. The EPDCCH set constituting the cell-specific search space may be defined in advance. The EPDCCH set constituting the cell-specific search space may be configured by using broadcast information of the base station 100. For this reason, effects by each of the DMRS are improved by using the above-described method.

In addition, in a case where the monitored EPDCCH is the terminal-specific search space, the base station 100 and the terminal 200 use the first DMRS in processing on the EPDCCH. In a case where the EPDCCH set is the cell-specific search space, the base station 100 and the terminal 200 use the second DMRS in processing on the EPDCCH. Thus, the EPDCCH which is disposed in the cell-specific search space and is transmitted and received is strong against time fluctuation of a channel.

Another example of the switching (selection) method of the first DMRS for a PDSCH and the second DMRS for a PDSCH in the base station 100 and the terminal 200 will be described. In this example, the base station 100 and the terminal 200 switch the DMRS for a PDSCH in accordance with the DMRS associated with the EPDCCH for performing notification of a DCI which schedules the PDSCH.

For example, in a case where the first DMRS for an EPDCCH is used, the base station 100 and the terminal 200 use the first DMRS for a PDSCH as the DMRS associated with the PDSCH which is scheduled by the DCI received by notification of the EPDCCH. In a case where the second DMRS for an EPDCCH is used, the base station 100 and the terminal 200 use the second DMRS for a PDSCH as the DMRS associated with the PDSCH which is scheduled by the DCI received by notification of the EPDCCH.

For example, in the case where the first DMRS for an EPDCCH is used, the base station 100 and the terminal 200 use the first DMRS for a PDSCH as the DMRS associated with the PDSCH which is scheduled by the DCI received by notification of the EPDCCH. In the case where the second DMRS for an EPDCCH is used, the base station 100 and the terminal 200 use the first DMRS for a PDSCH or the second DMRS for a PDSCH as the DMRS associated with the PDSCH which is scheduled by the DCI received by notification of the EPDCCH. Switching between the first DMRS for a PDSCH and the second DMRS for a PDSCH may be performed by using other methods.

It is possible to reduce overhead of configuration information regarding the DMRS for a PDSCH by using the above-described method.

Switching between the first DMRS and the second DMRS, which is described in the first embodiment, may be applied in a resource which cannot be used by a terminal which does not support the second DMRS. Only the first DMRS may be used in a resource which can be used by a terminal which does not support the second DMRS. For example, the resource which cannot be used by a terminal which does not support the second DMRS is a resource obtained by using a carrier, a resource block, a sub-frame, a radio frame, a component carrier, and the like, as a unit.

<Second Embodiment>

A second embodiment according to the present invention will be described below. In the first embodiment, a case where the first DMRS and the second DMRS are switched is described. In this embodiment, a case where switching is performed in other processing will be described. This embodiment is different from the first embodiment in terms of a target to be switched. Similar criteria to the description in the first embodiment may be used as criteria for switching (instruction/configuration being the basis of switching). A base station and a terminal according to this embodiment may have similar structure to the base station and the terminal described in the first embodiment according to the present invention. Parts (first state and second state which are to be switched) different from the descriptions in the first embodiment according to present invention will be described below.

Next, a difference between the first state and the second state will be described below. As described above, the base station 100 and the terminal 200 may use a plurality of states such as the first state and the second state. The state base station 100 and the terminal 200 may performing switching (selection) as follows for different states: various types of processing (transmission processing, reception processing, or the like), structure (channel structure, signal structure, or the like), or a configuration.

An example of the first state and the second state relates to a configuration of the CSI-RS. The first state and the second state may have different values which are allowed to be configured for the CSI-RS. For example, values allowed to be configured for the CSI-RS in the second state are the same as some of values allowed to be configured for the CSI-RS in the first state. Particularly, in a case where the second DMRS pattern is used in the second state, the DMRS may be configured by using a resource element onto which the CSI-RS is mapped. Thus, it is possible to reduce a probability of making a mistake in a configuration relating to the CSI-RS, in the base station 100 and the terminal 200 by excluding such a configuration of the CSI-RS. The values allowed to be configured for the CSI-RS may be switched in accordance with the transmission mode. Particularly, switching of the values allowed to be configured for the CSI-RS may also be applied in a case where switching between the first DMRS and the second DMRS is performed in accordance with the transmission mode.

An example of the first state and the second state is generation processing of the DMRS for a PDSCH.

A sequence constituting the DMRS, and the like is switched in the DMRS generated by the base station 100 and the terminal 200. The sequence of the DMRS is constituted by using a scrambling sequence (pseudo-random sequence) and an orthogonal sequence (orthogonal code (for example, Hadamard code)).

The DMRS for a PDSCH in the first state and the DMRS for a PDSCH in the second state may be constituted by using scrambling sequences which are independently configured or defined. For example, parameters for generating the scrambling sequences may be independently configured for the DMRS for a PDSCH in the first state and the DMRS for a PDSCH in the second state. An initial value for generating the scrambling sequences is configured by using a virtual cell ID (DMRS scrambling sequence initialization parameter) and a scrambling ID. The virtual cell ID is configured through an RRC and the scrambling ID is configured through a PDCCH and/or an EPDCCH. The virtual cell ID and/or the scrambling ID may be configured independently for the DMRS for a PDSCH in the first state and the DMRS for a PDSCH in the second state. Values of the virtual cell ID and/or the scrambling ID, which are allowed to be configured for the DMRS for a PDSCH in the first state and the DMRS for a PDSCH in the second state, may be different from each other. For example, the value of the scrambling ID which is allowed to be configured for the DMRS for a PDSCH in the first state may be 0 or 1. The value of the scrambling ID which is allowed to be configured for the DMRS for a PDSCH in the second state may be 2 or 3. The virtual cell ID and/or the scrambling ID may be configured for one or both of the DMRS for a PDSCH in the first state and the DMRS for a PDSCH in the second state, through the PDCCH and/or the RRC. The virtual cell ID and/or the scrambling ID may be defined in advance for one or both of the DMRS for a PDSCH in the first state and the DMRS for a PDSCH in the second state.

In a case where the virtual cell ID and/or the scrambling ID are not configured for one or both of the DMRS for a PDSCH in the first state and the DMRS for a PDSCH in the second state, the virtual cell ID and/or the scrambling ID may be configured by using a predetermined value, a value configured for other parameters, and the like. For example, in a case where the virtual cell ID is not configured for one or both of the DMRS for a PDSCH in the first state and the DMRS for a PDSCH in the second state, the virtual cell ID may be a physical cell ID of the cell, a virtual cell ID, or a physical cell ID of the primary cell or the secondary cell. For example, in a case where the virtual cell ID and/or the scrambling ID is configured for one of the DMRS for a PDSCH in the first state and the DMRS for a PDSCH in the second state, and is not configured for the other of the DMRS for a PDSCH in the first state and the DMRS for a PDSCH in the second state, the virtual cell ID and/or the scrambling ID for the DMRS for a PDSCH, which is not configured may be the same as the virtual cell ID and/or the scrambling ID for the configured DMRS for a PDSCH.

The DMRS for a PDSCH in the first state and the DMRS for a PDSCH in the second state may be constituted by using orthogonal sequences which are independently configured or defined. For example, the orthogonal sequences used for the antenna ports are independently configured or defined for the DMRS for a PDSCH in the first state and the DMRS for a PDSCH in the second state. The orthogonal sequence corresponding to the antenna ports 7A to 14A may be different from the orthogonal sequence corresponding to the antenna ports 7 to 14. The orthogonal sequence corresponding to the antenna ports 7 to 14 may be the same as the orthogonal sequence corresponding to the antenna ports 11A, 13A, 12A, 14A, 7A, 9A, 8A, and 10A.

The DMRS for a PDSCH in the first state and the DMRS for a PDSCH in the second state are constituted by using the scrambling sequences and/or the orthogonal sequences which are independently configured or defined, and by using the above-described method. Thus, interference is also suppressed in a case where the DMRS for a PDSCH in the first state and the DMRS for a PDSCH in the second state are multiplexed in the same resource.

An example of the first state and the second state is a configuration or definition relating to quasi co-location of the DMRS for a PDSCH.

In a case where long duration characteristics of a channel in a certain antenna port may be estimated based on a channel in another antenna ports, it is called that the two antenna ports have quasi co-location. The long duration characteristics includes delay spread, Doppler spread, Doppler shift, average gain, and or average delay. That is, in a case where two antenna ports have quasi co-location, it may be assumed that the base station 100 and/or the terminal 200 have the same long duration characteristics of a channel in the two antenna port.

Quasi co-locations for the DMRS for a PDSCH in the first state and the DMRS for a PDSCH in the second state may be independently configured or defined. For example, in a case where plural types of operation relating to quasi co-location are defined, these types may be independently configured for the DMRS for a PDSCH in the first state and the DMRS for a PDSCH in the second state. In a first type (also referred to as a type A), the base station 100 and/or the terminal 200 assume that an antenna port associated with the DMRS for a PDSCH, an antenna port associated with the CRS of the serving cell, and an antenna port associated with the CSI-RS of the serving cell have quasi co-location. In a second type (also referred to as a type B), the base station 100 and/or the terminal 200 assume that an antenna port associated with the DMRS for a PDSCH, and an antenna port associated with the CSI-RS configured for the terminal 200 by the base station 100 have quasi co-location.

Values allowed to be configured for the CSI-RS which is assumed to have quasi co-location may be different from each other for the first DMRS for a PDSCH and the second DMRS for a PDSCH. For example, values allowed to be configured for the CSI-RS which is assumed to have quasi co-location with the second DMRS for a PDSCH are the same as some of values allowed to be configured for the CSI-RS which is assumed to have quasi co-location with the DMRS for a PDSCH in the first state. Particularly, in a case where the second DMRS pattern is used, the DMRS may be constituted by using a resource element onto which the CSI-RS may be mapped. Thus, it is possible to reduce a probability of making a mistake in a configuration relating to quasi co-location in the base station 100 and the terminal 200 by excluding such a configuration of the CSI-RS.

Quasi co-location for the DMRS for a PDSCH in the first state and the DMRS for a PDSCH in the second state may be performed by using the same configuration or definition. A configuration of a type of an operation relating to quasi co-location, and/or a configuration of the CSI-RS having quasi co-location may be the same for the DMRS for a PDSCH in the first state and the DMRS for a PDSCH in the second state. For example, a configuration for the DMRS for a PDSCH in the first state is also applied to the DMRS for a PDSCH in the second state.

An example of the first state and the second state is generation processing of the DMRS for an EPDCCH.

A sequence constituting the DMRS, and the like is switched in the DMRS generated by the base station 100 and the terminal 200. The sequence of the DMRS is constituted by using a scrambling sequence (pseudo-random sequence) and an orthogonal sequence (orthogonal code).

The DMRS for an EPDCCH in the first state and the DMRS for an EPDCCH in the second state may be constituted by using scrambling sequences which are independently configured or defined. For example, parameters for generating the scrambling sequences may be independently configured for the DMRS for an EPDCCH in the first state and the DMRS for an EPDCCH in the second state. An initial value for generating the scrambling sequences is configured by using a virtual cell ID (DMRS scrambling sequence initialization parameter) configured through an RRC and a scrambling ID defined in advance. The virtual cell ID and/or the scrambling ID may be configured or defined independently for the DMRS for an EPDCCH in the first state and the DMRS for an EPDCCH in the second state. Values of the virtual cell ID and/or the scrambling ID, which are allowed to be configured for the DMRS for an EPDCCH in the first state and the DMRS for an EPDCCH in the second state may be different from each other. For example, the value of the scrambling ID which is allowed to be configured for the DMRS for an EPDCCH in the first state may be 2. The value of the scrambling ID which is allowed to be configured for the DMRS for an EPDCCH in the second state may be 3. The virtual cell ID and/or the scrambling ID may be configured for one or both of the DMRS for an EPDCCH in the first state and the DMRS for an EPDCCH in the second state, through the PDCCH and/or the RRC. The virtual cell ID and/or the scrambling ID may be defined in advance for one or both of the DMRS for an EPDCCH in the first state and the DMRS for an EPDCCH in the second state.

In a case where the virtual cell ID and/or the scrambling ID are not configured for one or both of the DMRS for an EPDCCH in the first state and the DMRS for an EPDCCH in the second state, the virtual cell ID and/or the scrambling ID may be configured by using a predetermined value, a value configured for other parameters, and the like. For example, in a case where the virtual cell ID is not configured for one or both of the DMRS for an EPDCCH in the first state and the DMRS for an EPDCCH in the first state, the virtual cell ID may be a physical cell ID of the cell, a virtual cell ID, or a physical cell ID of the primary cell or the secondary cell. For example, in a case where the virtual cell ID and/or the scrambling ID is configured for one of the DMRS for an EPDCCH in the first state and the DMRS for an EPDCCH in the first state, and is not configured for the other of the DMRS for an EPDCCH in the first state and the DMRS for an EPDCCH in the second state, the virtual cell ID and/or the scrambling ID for the DMRS for an EPDCCH, which is not configured or defined may be the same as the virtual cell ID and/or the scrambling ID for the DMRS for an EPDCCH which is configured or defined.

The DMRS for an EPDCCH in the first state and the DMRS for an EPDCCH in the second state may be constituted by using orthogonal sequences which are independently configured or defined. For example, the orthogonal sequences used for the antenna ports are independently configured or defined for the DMRS for an EPDCCH in the first state and the DMRS for an EPDCCH in the second state. The orthogonal sequence corresponding to the antenna ports 107 to 110 may be different from the orthogonal sequence corresponding to the antenna ports 107A to 110A. The orthogonal sequence corresponding to the antenna ports 107 to 110 may be the same as the orthogonal sequence corresponding to the antenna ports 108A, 107A, 110A, and 109A. The orthogonal sequence corresponding to the antenna ports 107A to 110A may be the same as the orthogonal sequence corresponding to the antenna ports 11, 13, 12, and 14.

The DMRS for an EPDCCH in the first state and the DMRS for an EPDCCH in the second state are constituted by using the scrambling sequences and/or the orthogonal sequences which are independently configured or defined, and by using the above-described method. Thus, interference is also suppressed in a case where the DMRS for an EPDCCH in the first state and the DMRS for an EPDCCH in the second state are multiplexed in the same resource.

An example of the first state and the second state is a configuration or definition relating to quasi co-location of the DMRS for an EPDCCH.

Quasi co-locations for the DMRS for an EPDCCH in the first state and the DMRS for an EPDCCH in the second state may be independently configured or defined. For example, in a case where plural types of operation relating to quasi co-location are defined, these types may be independently configured for the DMRS for an EPDCCH in the first state and the DMRS for an EPDCCH in the second state. In a first type (also referred to as a type A), in the base station 100 and/or the terminal 200, it is assumed that an antenna port associated with the DMRS for an EPDCCH, and an antenna port associated with the CRS of the serving cell have quasi co-location. In a second type (also referred to as a type B), in the base station 100 and/or the terminal 200, it is assumed that an antenna port associated with the DMRS for an EPDCCH, and an antenna port associated with the CSI-RS which is configured for the terminal 200 by the base station 100 have quasi co-location.

Values allowed to be configured for the CSI-RS which is assumed to have quasi co-location may be different from each other for the first DMRS for an EPDCCH and the second DMRS for an EPDCCH. For example, values allowed to be configured for the CSI-RS which is assumed to have quasi co-location with the DMRS for an EPDCCH in the first state are the same as some of values allowed to be configured for the CSI-RS which is assumed to have quasi co-location with the DMRS for an EPDCCH in the first state. Particularly, in a case where the second DMRS pattern is used, the DMRS may be constituted by using a resource element onto which the CSI-RS may be mapped. Thus, it is possible to reduce a probability of making a mistake in a configuration relating to quasi co-location in the base station 100 and the terminal 200 by excluding such a configuration of the CSI-RS.

Quasi co-location for the DMRS for an EPDCCH in the first state and the DMRS for an EPDCCH in the second state may be performed by using the same configuration or definition. A configuration of a type of an operation relating to quasi co-location, and/or a configuration of the CSI-RS having quasi co-location may be the same for the DMRS for an EPDCCH in the first state and the DMRS for an EPDCCH in the second state. For example, a configuration for the DMRS for an EPDCCH in the first state is also applied to the DMRS for an EPDCCH in the first state.

An example of the first state and the second state is processing on feedback information. For example, the terminal 200 assumes the first state or the second state, and generates first feedback information or second feedback information. The first feedback information or the second feedback information may be generated for the PDSCH which is differently assumed.

The feedback information is information (CSI; Channel state information) regarding a channel state of a downlink. The feedback information is generated based on the reference signal from the base station 100 by the terminal 200, and performs a report to the base station 100. A Channel quality indicator (CQI), a Precoding matrix indicator (PMI), a Precoding type indicator (PTI), a Rank indication (RI), and/or the like constitute the feedback information. The CQI indicates a modulation method and a coding rate which satisfy predetermined reception quality. The predetermined reception quality may be set such that an error rate of a transport block of the PDSCH does not exceed 10%. The PMI indicates a precoding weight selected from a code book obtained by defining a plurality of precoding weights (precoding matrix) in advance. The PTI indicates a type of the feedback information. The RI indicates the number of performing MIMO multiplexing (the number of performing spatial multiplexing, the number of ranks). The PMI may be selected based on the RI which has been selected already. The CQI may be selected based on the RI and/or the PMI which has been selected already.

The feedback information is generated based on a CSI process which is configured for the terminal 200 by the base station 100. One CSI process or more may be configured, and the feedback information is independently generated for each CSI process. A resource of the CSI-RS and the CSI-IM, which is used for generating the feedback information may be independently generated for each CSI process.

Plural types of modes in which a report is performed to the base station 100 from the terminal 200 may be defined. These report modes are configured so as to be specified for the base station 100 or the terminal 200. For example, in a mode in which the PMI and the RI are reported, the terminal 200 reports the RI, the PMI, and the CQI to the base station 100 periodically or non-periodically. In a mode in which the PMI and the RI are not reported, the terminal 200 reports the CQI to the base station 100 periodically or non-periodically. In the mode in which the PMI and the RI are not reported, the terminal 200 does not report the RI and the PMI to the base station 100.

The terminal 200 switches an assumption of the DMRS associated with the PDSCH or the EPDCCH, in a case where the feedback information is generated. In a case of the first state, the feedback information to be reported by the terminal 200 is generated on the assumption that the first DMRS pattern is used. In a case of the second state, the feedback information to be reported by the terminal 200 is generated on the assumption that the second DMRS pattern is used. The first DMRS pattern or the second DMRS pattern which is assumed for generating the feedback information is based on the number of ranks, which is indicated by the selected RI. For example, overhead of the first DMRS pattern or the second DMRS pattern assumed for generating the PMI and/or the CQI, for the PDSCH or the EPDCCH is determined by the number of ranks indicated by the RI which has been selected already.

Descriptions will be made using a specific example. In a case where the first transmission mode and the mode of reporting the PMI and the RI are configured for the terminal 200, the RI, the PMI, and the CQI which are to be reported by the terminal 200 are generated on the assumption that the first DMRS pattern is used for a predetermined PDSCH or EPDCCH. In a case where the second transmission mode and the mode of reporting the PMI and the RI are configured for the terminal 200, the RI, the PMI, and the CQI which are to be reported by the terminal 200 are generated on the assumption that the second DMRS pattern is used for a predetermined PDSCH or EPDCCH. In a case where the first transmission mode and the mode of not reporting the PMI and the RI are configured for the terminal 200, the CQI to be reported by the terminal 200 is generated for a predetermined PDSCH or EPDCCH having an assumption that the antenna port 7 or the antenna port 107 is used in the first DMRS pattern. In a case where the second transmission mode and the mode of not reporting the PMI and the RI are configured for the terminal 200, the CQI to be reported by the terminal 200 is generated on the assumption that the antenna port 7A or the antenna port 107A is used in the second DMRS pattern for a predetermined PDSCH or EPDCCH.

As a resource used as a reference for generating the feedback information, a CSI reference resource is defined. The CSI reference resource is defined by a group of resource blocks corresponding to a unit of generating the CQI, in the frequency domain. The CSI reference resource is defined by a predetermined sub-frame, in the time domain. In the CSI reference resource, an assumption for generating the feedback information may be independently defined for the first state and the second state.

An example of a switched assumption for generating the feedback information is the presence or the absence of a resource used for a control signal. In the case of the first state, the feedback information is generated on the assumption that the first three OFDM symbols in the CSI reference resource are used for the control signal. That is, in the case of the first state, the feedback information is generated on the assumption that the PDSCH is mapped onto resources other than the first three OFDM symbols in a sub-frame of the CSI reference resource. In the case of the second state, the feedback information is generated on the assumption that there is no resource used for the control signal in the CSI reference resource. That is, in the case of the second state, the feedback information is generated on the assumption that the PDSCH is mapped onto resources including the first three OFDM symbols in the CSI reference resource.

Another example of the switched assumption for generating the feedback information is a resource used for a reference signal which is specified for the base station 100. In the case of the first state, the feedback information is generated on the assumption that the CRS is mapped and the tracking RS is not mapped in the CSI reference resource. In the case of the second state, the feedback information is generated on the assumption that the tracking RS is mapped and the CRS is not mapped in the CSI reference resource.

A sub-frame corresponding to the CSI reference resource may be independently configured for the first feedback information and the second feedback information. For example, a sub-frame corresponding to the CSI reference resource in the first feedback information may be configured independently from a sub-frame corresponding to the CSI reference resource in the second feedback information. The sub-frame corresponding to the CSI reference resource may be constituted by information having a bitmap format for a predetermined number of sub-frames.

In a case where the base station 100 may configure either of the first state and the second state for the terminal 200 by using the above-described method, the terminal 200 may generate appropriate feedback information in accordance with the configuration. For example, in a case where the base station 100 may configure either of the first DMRS pattern and the second DMRS pattern for the terminal 200, the terminal 200 may generate appropriate feedback information in accordance with the configuration. Particularly, in a case where reception characteristics in the terminal 200 are different between the first DMRS pattern and the second DMRS pattern, the terminal 200 may generate the feedback information based on the reception characteristics. For this reason, the base station 100 can realize appropriate scheduling for the terminal 200.

An example of the first state and the second state is puncture processing or rate matching processing for a channel or a signal.

In the rate matching processing, the base station 100 skips resources (resource elements) onto which the first DMRS or the second DMRS is mapped, and maps a channel or a signal onto predetermined resources.

In the rate matching processing, the terminal 200 skips the resources (resource elements) onto which the first DMRS or the second DMRS is mapped, and demaps a channel or a signal from the predetermined resources.

In the puncture processing, the base station 100 does not skip the resources (resource elements) onto which the first DMRS or the second DMRS is mapped, and maps a channel or a signal onto the predetermined resources. However, the base station 100 maps the first DMRS or the second DMRS onto the resources (resource elements) onto which the first DMRS or the second DMRS is to be. For example, in the puncture processing, the base station 100 maps a channel or a signal onto predetermined resources and the base station 100 overwrites and maps the first DMRS or the second DMRS in and onto the resources (resource elements) onto which the first DMRS or the second DMRS is to be mapped.

In the puncture processing, the terminal 200 does not skip the resources (resource elements) onto which the first DMRS or the second DMRS is mapped, and demaps a channel or a signal onto the predetermined resources. However, the terminal 200 performs processing on the assumption that the first DMRS or the second DMRS is mapped onto the resources (resource elements) onto which the first DMRS or the second DMRS is to be mapped. For example, in the puncture processing, the terminal 200 performs reception processing for a channel or a signal on the assumption that a portion of the channel or the signal corresponding to the resources (resource element) onto which the first DMRS or the second DMRS is mapped is missed.

The puncture processing or the rate matching processing of a channel or a signal for the first DMRS or the second DMRS may be independently configured or defined. For example, in a case where the first DMRS is used, the base station 100 and/or the terminal 200 perform the puncture processing or the rate matching processing of a channel or a signal on the resources onto which the first DMRS is mapped. In a case where the second DMRS is used, the base station 100 and/or the terminal 200 perform the puncture processing or the rate matching processing of a channel or a signal on the resources onto which the second DMRS is mapped.

For example, in the case where the first DMRS is used, the base station 100 and/or the terminal 200 perform the puncture processing or the rate matching processing of the channel or the signal on the resources onto which the first DMRS and the second DMRS are mapped. In the case where the second DMRS is used, the base station 100 and/or the terminal 200 perform the puncture processing or the rate matching processing of a channel or a signal on the resources onto which the first DMRS and the second DMRS are mapped.

A channel or a signal, and the first DMRS or the second DMRS may be efficiently multiplexed in predetermined resources. The terminal 200 performs the puncture processing or the rate matching processing, and thus it is possible to reduce deterioration of reception quality of the channel or the signal.

An example of the first state and the second state is puncture processing and rate matching processing of the PDSCH or the EPDCCH.

In the rate matching processing of the PDSCH or the EPDCCH, the base station 100 skips resources (resource elements) onto which a physical signal (reference signal such as the CRS, the DMRS, and the CSI-RS, synchronization signal, and the like) is mapped, and maps the PDSCH or the EPDCCH onto predetermined resources.

In the rate matching processing of the PDSCH or the EPDCCH, the terminal 200 skips the resources (resource elements) onto which the physical signal is mapped, and demaps the PDSCH or the EPDCCH from the predetermined resources.

In the puncture processing of the PDSCH or the EPDCCH, the base station 100 does not skip resources (resource elements) onto which the physical signal is mapped, and maps the PDSCH or the EPDCCH onto predetermined resources. However, the base station 100 maps (overwrites the physical signal in the PDSCH or the EPDCCH and then maps) the physical signal onto the resources (resource elements) onto which the physical signal is to be mapped.

In the puncture processing of the PDSCH or the EPDCCH, the terminal 200 does not skip the resources (resource elements) onto which the physical signal is mapped, and demaps the PDSCH or the EPDCCH onto the predetermined resources. However, the terminal 200 performs demapping processing on the assumption that the PDSCH or the EPDCCH is mapped onto the resources (resource elements) onto which the physical signal is to be mapped. Preferably, the terminal 200 performs reception processing (error correction decoding) of the PDSCH or the EPDCCH on the assumption that a portion of the PDSCH or the EPDCCH corresponding to the resources (resource elements) onto which the physical signal is mapped is missed (in a state where likelihood of demodulation bits in this resource elements is set to be low).

In the first state, the rate matching processing may be performed on the PDSCH or the EPDCCH, and the puncture processing may be performed on the PDSCH or the EPDCCH in the second state. Thus, since rate matching is performed on the physical signal of which a position is recognized in advance by the terminal 200, it is possible to perform the optimal rate matching processing. Since the puncture processing is performed on the physical signal of which a position is not recognized in advance by the terminal 200, it is not required to notify the terminal 200 of positions of all of the physical signals from the base station 100.

An example of the first state and the second state is a structure of the EREG and/or the ECCE.

In the first state and the second state, the structure of the EREG and/or the ECCE in the RB pair of the EPDCCH set may be independently configured or defined.

<Third Embodiment>

A third embodiment according to the present invention will be described below. A communication system according to this embodiment includes the base station and the terminal which are described in the first or the second embodiment according to the present invention. Parts different from the descriptions in the first or the second embodiment according to the present invention will be described below.

In the third embodiment according to the present invention, the base station 100 and the terminal 200 switch the DMRS (or the state in the second embodiment) used in processing on a channel, in accordance with a carrier type (cell type, CC type) of a cell (component carrier, carrier). For example, the base station 100 and the terminal 200 switch the DMRS used in processing on a channel, in accordance with the carrier type of a cell, which is configured for the terminal 200 by the base station 100.

The base station 100 may communicate with the terminal 200 by using a plurality of carrier types. For example, the base station 100 may use a conventional carrier type (LCT; Legacy carrier type) and a new carrier type (NCT; New carrier type). The LCT is also referred to as a first carrier type and the NCT is also referred to as a second carrier type.

Fig. 10 is a diagram illustrating an example of frequency assignment in the communication system using the plurality of carrier types. The base station 100 and/or the terminal 200 may use the LCT or the NCT for each cell. In the example of Fig. 10, the base station 100 uses two cells which are a first cell using a first frequency (F1) and a second cell using a second frequency (F2). The LCT (first carrier type) is configured in the first cell and the NCT (second carrier type) is configured in the second cell.

The first cell and the second cell may be transmitted from the same base station (transmission point) or may be transmitted from the different base stations (transmission points). Even though the first cell and the second cell are transmitted from the different base stations (transmission points), the terminal 200 may not recognize communication with the plurality of base stations, and may communicate with a single base station.

The frequency assignment illustrated in Fig. 10 is only an example, and it is not limited thereto. For example, another example of frequency assignment in the communication system using the NCT is a communication system using heterogeneous network deployment. A base station of a macro cell and a base station of a small cell use independent cells. One or both of the macro cell and the small cell may use the NCT. These cells may use different frequencies or the same frequency. For example, another example of the communication system using the NCT is a communication system using the NCT standalone (independently). The terminal 200 communicates with a cell using the NCT.

The LCT and NCT are different from each other in a carrier type. For example, the LCT is a carrier type used in all terminals which support LTE and include the conventional terminal. The NCT is a carrier type used in only a terminal which allows the NCT to be supported, other than the conventional terminal. Details of the LCT and the NCT will be described below. In these cells, carrier aggregation may be performed. Here, carrier aggregation means combination (collection) of two cells or more in order to cause the base station 100 and the terminal 200 to support a wide frequency bandwidth.

The base station 100 uses the first DMRS in a cell of the LCT, and uses the second DMRS in a cell of the NCT. For example, the base station 100 uses the first DMRS as the DMRS associated with a channel transmitted in a cell, in a case where the cell configured for the terminal 200 is the LCT. The base station 100 uses the second DMRS as the DMRS associated with a channel transmitted in a cell, in a case where the cell configured for the terminal 200 is the NCT.

The terminal 200 uses the first DMRS in a cell of the LCT, and uses the second DMRS in a cell of the NCT. For example, the terminal 200 uses the first DMRS as the DMRS associated with a channel transmitted in a cell, in a case where the cell configured by the base station 100 is the LCT. The terminal 200 uses the second DMRS as the DMRS associated with a channel transmitted in a cell, in a case where the cell configured by the base station 100 is the NCT.

Next, details of a recognition method of the carrier type will be described. The recognition method is used for switching of the terminal 200 between the first DMRS and the second DMRS.

In an example of a method of recognizing the carrier type, information indicating whether or not the corresponding cell is the NCT is used. The information indicating whether the cell is the NCT may be used as information indicating either of the LCT and the NCT. For example, the base station 100 configures whether or not a cell is the NCT, so as to be specified for the terminal 200, in a case where the cell is configured for the terminal 200. The terminal 200 configures whether or not a cell is the NCT, so as to be specified for the terminal 200, and recognizes the carrier type of the cell in a case where the cell is configured by the base station 100. For example, the base station 100 causes information of whether or not the cell of the base station 100 is the NCT to be included in broadcast information, and transmits a result of inclusion. The terminal 200 recognizes the carrier type of a cell based on information of whether or not the cell is the NCT which is broadcasted by the base station 100.

In another example of the method of recognizing the carrier type, different channels or signals in the LCT and the NCT are used. The base station 100 transmits the different channels or signals in the LCT and the NCT. The different channels or signals in the LCT and the NCT correspond to the primary synchronization signal, the secondary synchronization signal, a broadcast channel, the reference signal, and the like. The terminal 200 recognizes the carrier type of the cell based on the different channels or signals in the LCT and the NCT, which are transmitted from the base station.

Recognition of the carrier type is not necessarily required. The base station 100 and/or the terminal 200 perform switching between the first DMRS and the second DMRS, based on a channel or a signal. For example, in a case where a first primary synchronization signal, a first secondary synchronization signal, a first broadcast channel, a first reference signal, and the like are used in a certain cell, the base station 100 uses the first DMRS in the cell. In a case where a second primary synchronization signal, a second secondary synchronization signal, a second broadcast channel, a second reference signal, and the like are used in a certain cell, the base station 100 uses the second DMRS in the cell. In a case where a first primary synchronization signal, a first secondary synchronization signal, a first broadcast channel, a first reference signal, and the like are used in a certain cell, the terminal 200 assumes using of the first DMRS in the cell. In a case where a second primary synchronization signal, a second secondary synchronization signal, a second broadcast channel, a second reference signal, and the like are used in a certain cell, the terminal 200 assumes using of the second DMRS in the cell.

In another example of the method of recognizing the carrier type, information or a configuration relating to the tracking RS is used.

Fig. 11 is a diagram illustrating an example of a resource block pair using the tracking RS. The tracking RS has some or all of characteristics as follows. The tracking RS is also referred to as a reduced CRS, an enhanced synchronization signal, and the like.

(1) The tracking RS is mapped onto only a predetermined sub-frame. The sub-frame onto which the tracking RS is mapped is defined in advance, is configured so as to be specified for the base station 100 or the terminal 200, or is received by notification from the base station 100. For example, the tracking RS is mapped onto sub-frames 0 and 5.
(2) The tracking RS is used for synchronization or tracking of the frequency direction and/or the time direction in the terminal 200.
(3) The tracking RS is mapped onto only a predetermined resource block. The resource block onto which the tracking RS is mapped is defined in advance, is configured so as to be specified for the base station 100 or the terminal 200, or is received by notification from the base station 100.
(4) A sequence of the tracking RS is generated similarly to that of the CRS of the antenna port 0. The sequence of the tracking RS may be generated based on a value (virtual cell ID) configured by RRC signaling.
(5) The tracking RS is mapped onto the resource element similar to that of the CRS of the antenna port 0. The tracking RS may be subjected to frequency shift in the RB pair, based on a value (virtual cell ID) configured by RRC signaling.

The base station 100 broadcasts information regarding the tracking RS or transmits a notification of the information regarding the tracking RS. The terminal 200 recognizes the.carrier type of the corresponding cell based on the information regarding the tracking RS, which is broadcasted or received from the base station.

Recognition of the carrier type is not necessarily required. The base station 100 and/or the terminal 200 perform switching between the first DMRS and the second DMRS, based on the information regarding the tracking RS. For example, in a case where the tracking RS is not used in a certain cell, the base station 100 uses the first DMRS in the cell. In a case where the tracking RS is used in a certain cell, the base station 100 uses the second DMRS in the cell. In a case where it is recognized that the tracking RS is not used in a certain cell, based on the information regarding the tracking RS, the terminal 200 assumes that the first DMRS in the cell is used. In a case where it is recognized that the tracking RS is used in a certain cell, based on the information regarding the tracking RS, the terminal 200 assumes that the second DMRS in the cell is used.

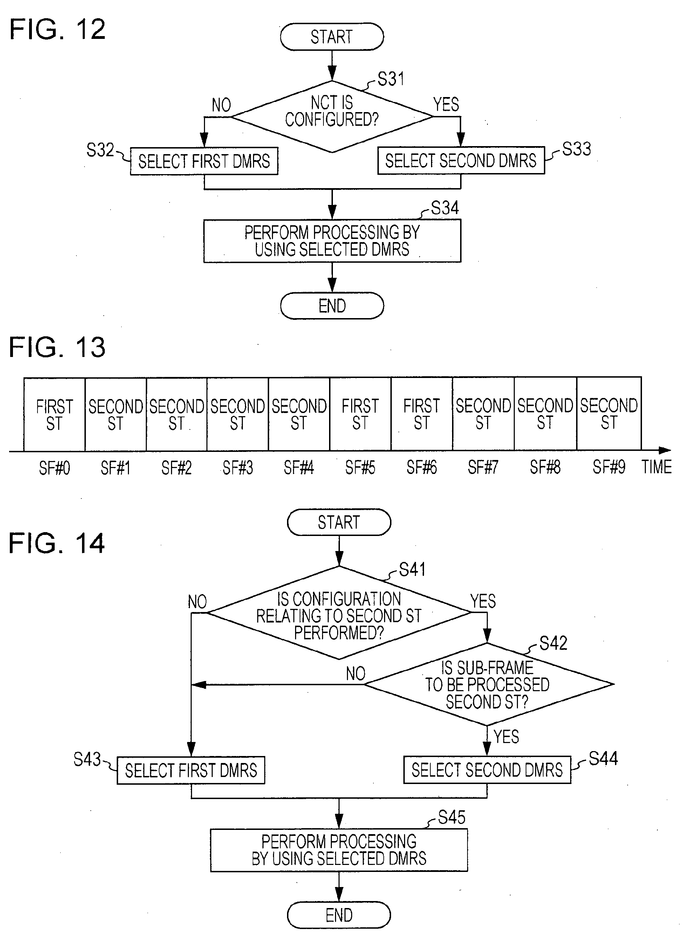

Fig. 12 is a diagram illustrating a flowchart of a terminal using an example of the selection method of the first DMRS and the second DMRS. In this example, switching (selection) of the first DMRS and the second DMRS in the base station 100 and the terminal 200 is performed in accordance with whether or not the NCT is configured or broadcasted for the terminal 200 by the base station 100.

In Step S31, the terminal 200 recognizes whether or not the NCT is configured or broadcasted for the terminal 200 by the base station 100, in a certain cell. In a case (NO) where the NCT is not configured or broadcasted for the terminal 200 by the base station 100 in the cell, the terminal 200 selects the first DMRS in Step S32. In a case (YES) where the NCT is configured or broadcasted for the terminal 200 by the base station 100 in the cell, the terminal 200 selects the second DMRS in Step S33. In Step S34, the terminal 200 performs processing on a channel of the cell by using the selected DMRS.

The method described in the first or the second embodiment may be applied to only the NCT. The carrier type may be recognized by using the method described in the first or the second embodiment. For example, in a case where the first DMRS is selected by using the method described in the first embodiment, it is recognized that the cell is the LCT. In a case where the second DMRS is selected by using the method described in the first embodiment, it is recognized that the cell is the NCT.

<Fourth Embodiment>

A fourth embodiment according to the present invention will be described below. A communication system according to this embodiment includes the base station and the terminal which are described in the first or the second embodiment according to the present invention. Parts different from the descriptions in the first or the second embodiment according to the present invention will be described below.

In the fourth embodiment according to the present invention, the base station 100 and the terminal 200 switch the DMRS (or the state in the second embodiment) used in processing on a channel, in accordance with a sub-frame type (radio frame type, slot type, symbol type) of a sub-frame (radio frame, slot, symbol). For example, the base station 100 and the terminal 200 switch the DMRS used in processing on a channel, in accordance with the sub-frame type configured for the terminal 200 by the base station 100.

The base station 100 may communicate with the terminal 200 by using a plurality of sub-frame types (ST). For example, the base station 100 may use a conventional sub-frame type (LST; Legacy sub-frame type) and a new sub-frame type (NST; New sub-frame type). The LST is also referred to as a first sub-frame type (first ST) and the NST is also referred to as a second sub-frame type (second ST).

Fig. 13 is a diagram illustrating an example of a sub-frame configuration in the communication system using the plurality of sub-frame types. The base station 100 and/or the terminal 200 may use the LST or the NST in a sub-frame unit. In the example of Fig. 13, sub-frames (SF) 0, 5, and 6 are configured as a first sub-frame type and sub-frames 1 to 4 and 7 to 9 are configured as a second sub-frame type, in one radio frame.

The LST and NST are different from each other in a sub-frame type. For example, the LST is a sub-frame type used in all terminals which support LTE and include the conventional terminal. The NST is a sub-frame type used in only a terminal which allows the NST to be supported, other than the conventional terminal. Details of the LST and the NST will be described below.

The base station 100 uses the first DMRS in the LST and uses the second DMRS in the NST. For example, the base station 100 uses the first DMRS as the DMRS associated with a channel transmitted in a sub-frame, in a case where the sub-frame configured for the terminal 200 has the LST. The base station 100 uses the second DMRS as the DMRS associated with a channel transmitted in a sub-frame, in a case where the sub-frame configured for the terminal 200 has the NST.

The terminal 200 uses the first DMRS in the LST, and uses the second DMRS in the NST. For example, the terminal 200 uses the first DMRS as the DMRS associated with a channel transmitted in a sub-frame, in a case where the sub-frame configured by the base station 100 has the LST. The terminal 200 uses the second DMRS as the DMRS associated with a channel transmitted in a sub-frame, in a case where the sub-frame configured by the base station 100 has the NST.

Next, details of a recognition method of the sub-frame type will be described. The recognition method is used for switching of the terminal 200 between the first DMRS and the second DMRS.

In an example of a method of recognizing the sub-frame type, information regarding the sub-frame type is used. For example, the information regarding the sub-frame type includes information indicating whether or not the sub-frame has the NST, information indicating the sub-frame has either of the LST and the NST, and the like.

The information regarding the sub-frame type may be used as information indicating the sub-frame type for each sub-frame, in one sub-frame or more. For example, the information regarding the sub-frame type may be used as information having a bitmap format for each sub-frame in a plurality of sub-frames.

The information regarding the sub-frame type may be broadcasted so as to be specified for the base station 100. For example, the base station 100 broadcasts the information regarding the sub-frame type through a broadcast channel. The terminal 200 recognizes the sub-frame type of the sub-frame based on the broadcasted information regarding the sub-frame type.

Notification of the information regarding the sub-frame type may be performed so as to be specified for the terminal 200. For example, the base station 100 notifies the terminal 200 of the information regarding the sub-frame type through PDCCH signaling, EPDCCH signaling, and/or RRC signaling, and performs a configuration relating to the sub-frame type. The terminal 200 configures the sub-frame type of the sub-frame based on the received information regarding the sub-frame type.

In another example of the method of recognizing the sub-frame type, different channels or signals in the LST and the NST are used. The base station 100 transmits the different channels or signals in the LST and the NST. The different channels or signals in the LST and the NST correspond to the primary synchronization signal, the secondary synchronization signal, the broadcast channel, the tracking RS, and the like. The terminal 200 recognizes the sub-frame type of the sub-frame based on the different channels or signals in the LST and the NST, which are transmitted from the base station.

Recognition of the sub-frame type is not necessarily required. The base station 100 and/or the terminal 200 perform switching between the first DMRS and the second DMRS, based on a channel or a signal. For example, in a case where a predetermined channel and/or signal such as the primary synchronization signal, the secondary synchronization signal, the broadcast channel, the tracking RS are not used in the sub-frame, the base station 100 uses the first DMRS in the sub-frame. In a case where a predetermined channel and/or signal such as the primary synchronization signal, the secondary synchronization signal, the broadcast channel, the tracking RS are used in a certain cell, the base station 100 uses the second DMRS in the cell. In a case where a predetermined channel and/or signal such as the primary synchronization signal, the secondary synchronization signal, the broadcast channel, the tracking RS are not used in a certain cell, the terminal 200 assumes using of the first DMRS in the cell. In a case where a predetermined channel and/or signal such as the primary synchronization signal, the secondary synchronization signal, the broadcast channel, the tracking RS are used in a certain cell, the terminal 200 assumes using of the second DMRS in the cell.

Fig. 14 is a diagram illustrating a flowchart of a terminal using an example of the selection method of the first DMRS and the second DMRS. In this example, switching (selection) of the first DMRS and the second DMRS in the base station 100 and the terminal 200 is performed in accordance with whether or not the NST (second ST) is configured or broadcasted for the terminal 200 by the base station 100.

In Step S41, the terminal 200 recognizes whether or not the NST is configured by the base station 100. In a case (YES) where the NST is configured by the base station 100, in Step S42, the terminal 200 recognizes whether or not a sub-frame to be processed has the NST, based on a configuration relating to the NST configured in Step S41. In a case (NO) where the NST is not configured by the base station 100 in Step S41, and in a case (NO) where it is recognized that a sub-frame to be processed does not have the NST in Step S42, the terminal 200 selects the first DMRS for the sub-frame to be processed in Step S43. In a case (YES) where it is recognized that the sub-frame to be processed has the NST in Step S42, the terminal 200 selects the second DMRS for the sub-frame to be processed in Step S44. In Step S45, the terminal 200 performs processing on a channel of the sub-frame by using the selected DMRS.

The sub-frame type may be configured independently from an Almost blank sub-frame (ABS). In the sub-frame configured as the ABS, the PDCCH and the PDSCH are not mapped. The sub-frame type may be configured independently from a CSI sub-frame set.

The methods described in the first or the second embodiment may be applied to only the NST. The sub-frame type may also be recognized by using the method described in the first or the second embodiment. For example, in a case where the first DMRS is selected by using the method described in the first embodiment, it is recognized that the sub-frame has the LST. In a case where the second DMRS is selected by using the method described in the first embodiment, it is recognized that the sub-frame has the NST.

The methods described in each of the above-described embodiments may be independently used or a method obtained by multiply combining the methods may be used.

In each of the above-described embodiments, the descriptions are made by using the resource element, the resource block, or the resource block pair as a mapping unit of a data channel, the control channel, the PDSCH, the PDCCH, the EPDCCH, and the reference signal, and by using the sub-frame or the radio frame as a transmitter in the time direction. However, it is not limited thereto. Similar effects may also be obtained by using space which is constituted by a certain frequency and a certain time, and a time unit instead of those.

In a case where the terminal 200 starts to communicate with the base station 100, the base station 100 is notified of information (terminal performance information or function group information) indicating whether or not functions described in each embodiment are usable for the base station 100, and thus the base station 100 can determine whether or not the functions described in each embodiment are usable. Further specifically, in a case where the functions described in each embodiment are usable, information indicating availability of the functions may be included in the terminal performance information. In a case where the functions described in each embodiment are not usable, information regarding unusable functions may not be included in the terminal performance information. In addition, in the case where the functions described in each embodiment are usable, 1 may be put into a field having a predetermined number of bits in the function group information. In the functions described in each embodiment are not usable, 0 may be put into the field having the predetermined number of bits in the function group information.

In each of the above-described embodiments, the descriptions are made by using the resource block as a mapping unit of the data channel, the control channel, the PDSCH, the PDCCH, the EPDCCH, and the reference signal, and by using the sub-frame or the radio frame as a transmitter in the time direction. However, it is not limited thereto. Similar effects may also be obtained by using space which is constituted by a certain frequency and a certain time, and a time unit instead of those. In each of the above-described embodiments, a case where demodulation is performed by using the RS which is subjected to the precoding processing is described, and the descriptions are made by using ports equivalent to the layer in MIMO as ports corresponding to the RS which is subjected to the precoding processing. However, it is not limited thereto. Similar effects may also be obtained by applying each of the above-described embodiments to ports corresponding to reference signals which are different from each other. For example, an Unprecoded RS may be used instead of a Precoded RS. Ports equivalent to an output end after the precoding processing, or ports equivalent to the physical antennae (or combination of the physical antennae) may be used as the ports.

A program which relates to the above-described embodiments and is operated in the base station 100 and the terminal 200 is a program (program causing a computer to perform functions) for controlling a CPU and the like such that the functions of the above-described embodiments according to the present invention are realized. Pieces of information handled by these devices are temporarily accumulated in a RAM at a time of performing processing, and then are stored in various ROMs or HDDs. The stored information is read as necessary by the CPU, and is modified and written. As a recording medium for storing the program, any of a semiconductor medium (for example, ROM, nonvolatile memory card, and the like), an optical recording medium (for example, DVD, MO, MD, CD, BD, and the like), a magnetic recording medium (for example, magnetic tape, flexible disc, and the like) may be used. The functions of the above-described embodiments are realized by executing the loaded program, and the functions of the above-described embodiments may be realized by performing processing with an operating system or other application programs based on an instruction from the program.

In a case where the program is distributed to the market, the program may be distributed in a state where the program is stored in a portable recording medium, or be transmitted to a server computer which is connected through a network such as the Internet. In this case, a storage device of the server computer is included in the scope of the present invention. In the above-described embodiments, a portion or the entirety of the base station 100 and the terminal 200 may be typically realized as an LSI which is an integrated circuit. Each of functional programs of the base station 100 and the terminal 200 may be realized as an individual chip, or some or all of the functional programs may be integrated and realized as a chip. A technology of realization of an integrated circuit may be realized as a dedicated circuit or a general processor without a limit to the LSI. In a case where a technology of realizing an integrated circuit which is replaced for the LSI shows due to advancement in semiconductor technology, an integrated circuit obtained by the shown technology may be used.

This specification invention is not limited to the above-described embodiments. A terminal device of this specification invention is not limited to application to a mobile station device, and may be applied to a stationary electronic device or a non-movable electronic device which is installed in the outside or the inside of a building, such as an AV device, a kitchen appliance, a cleaning and washing machine, an air conditioner, office equipment, a vending machine, other living appliances, and the like.

Hitherto, the embodiments according to this invention are described with reference to the accompanying drawings. However, a specific configuration is not limited to the embodiments, and alterations may occur depending on design requirements within the scope of the invention without departing from a gist of the invention. For example, design alterations may occur such that a processing order of a portion of a series of processing is reversed. Regarding the present invention, various alterations may occur within the scope of the appended claims. An embodiment obtained by moderately combining technical means which is disclosed in other embodiments is included within the technical scope of the present invention. Substitutions between components which are described in each of the embodiments and show similar effects are included.

[Conclusion]

(1) This invention is to solve the above-described problems. According to an aspect of the present invention, there is provided a base station which communicates with a terminal by using a resource element constituted by a subcarrier and an OFDM symbol. The base station includes an EPDCCH generator, a reference signal generator, and a transmitter. The EPDCCH generator generates an EPDCCH for notification of control information for the terminal. The reference signal generator generates a first demodulation reference signal or a second demodulation reference signal which is a demodulation reference signal associated with the EPDCCH and is enabled to be multiplexed between a plurality of antenna ports. The transmitter transmits the EPDCCH and transmits the first demodulation reference signal or the second demodulation reference signal selected based on a configuration for the terminal.

(2) According to an aspect of the present invention, in the base station, the first demodulation reference signal is mapped onto the resource element by using a first mapping pattern, and the second demodulation reference signal is mapped onto the resource element by using a second mapping pattern.

(3) According to an aspect of the present invention, in the base station, the first demodulation reference signal or the second demodulation reference signal is selected based on a transmission mode which is configured for the terminal.

(4) According to an aspect of the present invention, in the base station, the first demodulation reference signal or the second demodulation reference signal is selected based on whether or not information regarding the second demodulation reference signal is configured in the terminal.

(5) According to an aspect of the present invention, in the base station, the first demodulation reference signal or the second demodulation reference signal is selected based on localized transmission or distributed transmission which is configured for the EPDCCH.

(6) According to an aspect of the present invention, in the base station, the first demodulation reference signal or the second demodulation reference signal is selected based on a search space which is configured for the EPDCCH.

(7) According to an aspect of the present invention, in the base station, the first demodulation reference signal or the second demodulation reference signal is selected based on a carrier type which is configured for a cell to which the EPDCCH is transmitted.

(8) According to an aspect of the present invention, in the base station, the first demodulation reference signal or the second demodulation reference signal is selected based on a sub-frame type which is configured for a sub-frame to which the EPDCCH is transmitted.

(9) According to an aspect of the present invention, there is provided a terminal which communicates with a base station by using a resource element constituted by a sub-carrier and an OFDM symbol. The terminal includes a receiver configured to receive an EPDCCH for notification of control information for the terminal and receive a first demodulation reference signal or a second demodulation reference signal which is a demodulation reference signal associated with the EPDCCH and is enabled to be multiplexed between a plurality of antenna ports. The first demodulation reference signal or the second demodulation reference signal is selected based on a configuration for the terminal.

(10) According to an aspect of the present invention, there is provided a communication system in which a base station and a terminal communicate with each other by using a resource element constituted by a sub-carrier and an OFDM symbol. The base station includes an EPDCCH generator, a reference signal generator, and a transmitter. The EPDCCH generator generates an EPDCCH for notification of control information for the terminal. The reference signal generator generates a first demodulation reference signal or a second demodulation reference signal which is a demodulation reference signal associated with the EPDCCH and is enabled to be multiplexed between a plurality of antenna ports. The transmitter transmits the EPDCCH and transmits the first demodulation reference signal or the second demodulation reference signal selected based on a configuration for the terminal. The terminal includes a receiver configured to receive the EPDCCH and receive the first demodulation reference signal or the second demodulation reference signal.

(11) According to an aspect of the present invention, there is provided a communication method which is used in a base station communicating with a terminal by using a resource element constituted by a sub-carrier and an OFDM symbol. The communication method includes a step of generating an EPDCCH for notification of control information for the terminal, a step of generating a first demodulation reference signal or a second demodulation reference signal which is a demodulation reference signal associated with the EPDCCH and is enabled to be multiplexed between a plurality of antenna ports, and a step of transmitting the EPDCCH and transmitting the first demodulation reference signal or the second demodulation reference signal selected based on a configuration for the terminal.

(12) According to an aspect of the present invention, there is provided a communication method which is used in a terminal communicating with a base station by using a resource element constituted by a sub-carrier and an OFDM symbol. The communication method includes a step of receiving an EPDCCH for notification of control information for the terminal and receiving a first demodulation reference signal or a second demodulation reference signal which is a demodulation reference signal associated with the EPDCCH and is enabled to be multiplexed between a plurality of antenna ports. The first demodulation reference signal or the second demodulation reference signal is selected based on a configuration for the terminal.

(13) According to an aspect of the present invention, there is provided an integrated circuit which is realized in a base station which communicates with a terminal by using a resource element constituted by a sub-carrier and an OFDM symbol. The integrated circuit includes a function to generate an EPDCCH for notification of control information for the terminal, a function to generate a first demodulation reference signal or a second demodulation reference signal which is a demodulation reference signal associated with the EPDCCH and is enabled to be multiplexed between a plurality of antenna ports, and a function to transmit the EPDCCH and transmit the first demodulation reference signal or the second demodulation reference signal selected based on a configuration for the terminal.

(14) According to an aspect of the present invention, there is provided an integrated circuit which is a communication method used in a terminal which communicates with a base station by using a resource element constituted by a sub-carrier and an OFDM symbol. The integrated circuit includes a function to receive an EPDCCH for notification of control information for the terminal and receive a first demodulation reference signal or a second demodulation reference signal which is a demodulation reference signal associated with the EPDCCH and is enabled to be multiplexed between a plurality of antenna ports. The first demodulation reference signal or the second demodulation reference signal is selected based on a configuration for the terminal.

Industrial Applicability

The present invention is appropriate for being used in a radio base station apparatus, a radio terminal apparatus, a radio communication system, and a radio communication method.

Reference Signs List

| | |
|---|---|
| 100 | BASE STATION |
| 101, 205 | INFORMATION PROCESSING SECTION |
| 110 | PDCCH GENERATION SECTION |
| 120 | EPDCCH GENERATION SECTION |
| 130 | PDSCH GENERATION SECTION |
| 111, 121, 131 | CODING UNIT |
| 112, 122, 132 | MODULATION UNIT |
| 113, 123, 133 | LAYER PROCESSING UNIT |
| 114, 124, 134 | PRECODING UNIT |
| 141 | REFERENCE SIGNAL GENERATOR |
| 151 | MULTIPLEXING UNIT |
| 152 | TRANSMISSION SIGNAL GENERATOR |
| 153, 242 | TRANSMITTER |
| 161, 201 | RECEIVER |
| 162 | UPLINK CHANNEL PROCESSING UNIT |
| 200 | TERMINAL |
| 202 | RECEPTION SIGNAL PROCESSING UNIT |
| 203 | SEPARATION UNIT |
| 204 | CHANNEL ESTIMATION UNIT |
| 210 | PDCCH PROCESSING SECTION |
| 220 | EPDCCH PROCESSING SECTION |
| 230 | PDSCH PROCESSING SECTION |
| 211, 221, 231 | CHANNEL EQUALIZATION UNIT |
| 212, 222, 232 | DEMODULATION UNIT |
| 213, 223, 233 | DECODING UNIT |
| 1501 | MACRO BASE STATION |
| 1502, 1503 | RRH |
| 1504 | TERMINAL |
| 1508, 1509 | LINE |
| 1505, 1506, 1507 | COVERAGE |

**Claims**

1. A base station which communicates with a terminal by using a resource element constituted by a sub-carrier and an OFDM symbol, the base station comprising:

   an EPDCCH generator configured to generate an EPDCCH for notification of control information for the terminal;
   a reference signal generator configured to generate a first demodulation reference signal or a second demodulation reference signal which is a demodulation reference signal associated with the EPDCCH and is enabled to be multiplexed between a plurality of antenna ports; and
   a transmitter configured to transmit the EPDCCH and transmits the first demodulation reference signal or the second demodulation reference signal selected based on a configuration for the terminal.

2. The base station according to Claim 1, wherein

the first demodulation reference signal is mapped onto the resource element by using a first mapping pattern, and the second demodulation reference signal is mapped onto the resource element by using a second mapping pattern.

3. The base station according to Claim 1, wherein
the first demodulation reference signal or the second demodulation reference signal is selected based on a transmission mode which is configured for the terminal.

4. The base station according to Claim 1, wherein
the first demodulation reference signal or the second demodulation reference signal is selected based on whether or not information regarding the second demodulation reference signal is configured in the terminal.

5. The base station according to Claim 1, wherein
the first demodulation reference signal or the second demodulation reference signal is selected based on localized transmission or distributed transmission which is configured for the EPDCCH.

6. The base station according to Claim 1, wherein
the first demodulation reference signal or the second demodulation reference signal is selected based on a search space which is configured for the EPDCCH.

7. The base station according to Claim 1, wherein
the first demodulation reference signal or the second demodulation reference signal is selected based on a carrier type which is configured for a cell to which the EPDCCH is transmitted.

8. The base station according to Claim 1, wherein
the first demodulation reference signal or the second demodulation reference signal is selected based on a sub-frame type which is configured for a sub-frame to which the EPDCCH is transmitted.

9. A terminal which communicates with a base station by using a resource element constituted by a sub-carrier and an OFDM symbol, the terminal comprising:

   a receiver configured to receive an EPDCCH for notification of control information for the terminal and receive a first demodulation reference signal or a second demodulation reference signal which is a demodulation reference signal associated with the EPDCCH and is enabled to be multiplexed between a plurality of antenna ports, wherein the first demodulation reference signal or the second demodulation reference signal is selected based on a configuration for the terminal.

10. A communication system in which a base station and a terminal communicate with each other by using a resource element constituted by a sub-carrier and an OFDM symbol, wherein
the base station comprising:

   an EPDCCH generator configured to generate an EPDCCH for notification of control information for the terminal, a reference signal generator configured to generate a first demodulation reference signal or a second demodulation reference signal which is a demodulation reference signal associated with the EPDCCH and is enabled to be multiplexed between a plurality of antenna ports, and
   a transmitter configured to transmit the EPDCCH and transmits the first demodulation reference signal or the second demodulation reference signal selected based on a configuration for the terminal, and

   the terminal comprising:

   a receiver configured to receive the EPDCCH and receive the first demodulation reference signal or the second demodulation reference signal.

11. A communication method which is used in a base station communicating with a terminal by using a resource element constituted by a sub-carrier and an OFDM symbol, the method comprising:

   a step of generating an EPDCCH for notification of control information for the terminal;
   a step of generating a first demodulation reference signal or a second demodulation reference signal which is a demodulation reference signal associated with the EPDCCH and is enabled to be multiplexed between a plurality of antenna ports; and

a step of transmitting the EPDCCH and transmitting the first demodulation reference signal or the second demodulation reference signal selected based on a configuration for the terminal.

12. A communication method which is used in a terminal communicating with a base station by using a resource element constituted by a sub-carrier and an OFDM symbol, the method comprising:

a step of receiving an EPDCCH for notification of control information for the terminal and receiving a first demodulation reference signal or a second demodulation reference signal which is a demodulation reference signal associated with the EPDCCH and is enabled to be multiplexed between a plurality of antenna ports, wherein the first demodulation reference signal or the second demodulation reference signal is selected based on a configuration for the terminal.

13. An integrated circuit which is realized in a base station which communicates with a terminal by using a resource element constituted by a sub-carrier and an OFDM symbol, the circuit comprising:

a function to generate an EPDCCH for notification of control information for the terminal;
a function to generate a first demodulation reference signal or a second demodulation reference signal which is a demodulation reference signal associated with the EPDCCH and is enabled to be multiplexed between a plurality of antenna ports; and
a function to transmit the EPDCCH and transmit the first demodulation reference signal or the second demodulation reference signal selected based on a configuration for the terminal.

14. A communication method which is used in a terminal which communicates with a base station by using a resource element constituted by a sub-carrier and an OFDM symbol, the method comprising:

a function to receive an EPDCCH for notification of control information for the terminal and receive a first demodulation reference signal or a second demodulation reference signal which is a demodulation reference signal associated with the EPDCCH and is enabled to be multiplexed between a plurality of antenna ports, wherein the first demodulation reference signal or the second demodulation reference signal is selected based on a configuration for the terminal.

# FIG. 1

EP 2 975 895 A1

# FIG. 2

RECEIVER (201) → RECEPTION SIGNAL PROCESSING UNIT (202) → SEPARATION UNIT (203)

PDCCH PROCESSING SECTION (210)
CHANNEL EQUALIZATION UNIT (211) → DEMODULATION UNIT (212) → DECODING UNIT (213)

EPDCCH PROCESSING SECTION (220)
CHANNEL EQUALIZATION UNIT (221) → DEMODULATION UNIT (222) → DECODING UNIT (223)

PDSCH PROCESSING SECTION (230)
CHANNEL EQUALIZATION UNIT (231) → DEMODULATION UNIT (232) → DECODING UNIT (233)

CHANNEL ESTIMATION UNIT (204)

INFORMATION PROCESSING UNIT (205)

TRANSMITTER (242) ← UPLINK CHANNEL GENERATOR (241)

(200)

EP 2 975 895 A1

## FIG. 3

ONE RADIO FRAME

ONE SLOT

| #0 | #1 | #2 | #3 | #4 | #5 | #6 | #7 | ······· | #18 | #19 |

ONE SUB-FRAME

## FIG. 4

ONE SUB-FRAME

## FIG. 5

FIG. 6

FIG. 7

FIG. 8

FIG. 9

FIG. 10

FIG. 11

FIG. 12

```
                         ┌─────────┐
                         │  START  │
                         └────┬────┘
                              │
                              ▼        ╱S31
                     ┌──────────────────┐
              NO    ╱     NCT IS         ╲    YES
        ┌─────────◄     CONFIGURED?       ►─────────┐
        │          ╲                     ╱          │
        │           └──────────────────┘           │
        ▼                                           ▼
   ┌─────────────────────┐              ┌──────────────────────┐
S32│ SELECT FIRST DMRS   │              │ SELECT SECOND DMRS   │S33
   └──────────┬──────────┘              └──────────┬───────────┘
              │                                    │
              └──────────────────┬─────────────────┘
                                 ▼            ╱S34
                    ┌──────────────────────────┐
                    │  PERFORM PROCESSING BY    │
                    │  USING SELECTED DMRS      │
                    └────────────┬─────────────┘
                                 ▼
                            ┌─────────┐
                            │   END   │
                            └─────────┘
```

FIG. 13

| FIRST ST | SECOND ST | SECOND ST | SECOND ST | SECOND ST | FIRST ST | FIRST ST | SECOND ST | SECOND ST | SECOND ST |
|----------|-----------|-----------|-----------|-----------|----------|----------|-----------|-----------|-----------|
| SF#0 | SF#1 | SF#2 | SF#3 | SF#4 | SF#5 | SF#6 | SF#7 | SF#8 | SF#9 | TIME

FIG. 14

```
                              ┌─────────┐
                              │  START  │
                              └────┬────┘
                                   │
                                   ▼         ╱S41
                          ┌──────────────────┐
                   NO    ╱  IS CONFIGURATION  ╲   YES
             ┌─────────◄  RELATING TO SECOND ST ►─────────┐
             │          ╲    PERFORMED?        ╱          │
             │           └──────────────────┘            ▼        ╱S42
             │                                   ┌──────────────────┐
             │                          NO      ╱  IS SUB-FRAME     ╲
             │              ◄─────────────────◄  TO BE PROCESSED     ►
             │                                  ╲  SECOND ST?       ╱
             │                                   └────────┬─────────┘
             │                                            │ YES
             ▼                                            ▼
   ┌─────────────────────┐              ┌──────────────────────┐
S43│ SELECT FIRST DMRS   │              │  SELECT SECOND DMRS  │S44
   └──────────┬──────────┘              └──────────┬───────────┘
              │                                    │
              └──────────────────┬─────────────────┘
                                 ▼            ╱S45
                    ┌──────────────────────────┐
                    │  PERFORM PROCESSING       │
                    │  BY USING SELECTED DMRS   │
                    └────────────┬─────────────┘
                                 ▼
                            ┌─────────┐
                            │   END   │
                            └─────────┘
```

FIG. 15

## INTERNATIONAL SEARCH REPORT

International application No.

PCT/JP2014/055297

| A. CLASSIFICATION OF SUBJECT MATTER |
|---|
| *H04W72/04*(2009.01)i, *H04J11/00*(2006.01)i |

According to International Patent Classification (IPC) or to both national classification and IPC

| B. FIELDS SEARCHED |
|---|

Minimum documentation searched (classification system followed by classification symbols)
H04W72/04, H04J11/00

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho    1971–2014   Toroku Jitsuyo Shinan Koho   1994–2014

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | MediaTek Inc., Utilization of DRS Antenna Ports for Diversity and Beamforming Schemes in ePDCCH, 3GPP TSG-RAN WG1 Meeting #68bis R1-121171, 2012.03.30, p1-p5 (http://www.3gpp.org/ftp/TSG_RAN/WG1_RL1/TSGR1_68b/Docs/R1-121171.zip) | 1,2,5,9-14<br>6,8<br>3,4,7 |
| Y | NEC Group, DM-RS antenna port association with ePDCCH transmission, 3GPP TSG-RAN WG1 Meeting #69 R1-122594, 2012.05.25, p1-p3 (http://www.3gpp.org/ftp/TSG_RAN/WG1_RL1/TSGR1_69/Docs/R1-122594.zip) | 6 |
| Y | Samsung, Multiplexing of Multiple E-PDCCHs for Distributed and Localized Transmissions, 3GPP TSG-RAN WG1 Meeting #68 R1-120191, 2012.02.10, p1-p3 (http://www.3gpp.org/ftp/TSG_RAN/WG1_RL1/TSGR1_68/Docs/R1-120191.zip) | 8 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>    28 March, 2014 (28.03.14) | Date of mailing of the international search report<br>    08 April, 2014 (08.04.14) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2014/055297 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | Ericsson, ST-Ericsson, Views on DL transmission mode for NCT, 3GPP TSG-RAN WG1 Meeting #72 R1-130550, 2013.02.01, p1-p3 (http://www.3gpp.org/ftp/TSG_RAN/WG1_RL1/TSGR1_72/Docs/R1-130550.zip) | 1,3,4,7,9-14<br>2,5,6,8 |
| P,X | WO 2013/140732 A1  (Panasonic Corp.),<br>26 September 2013 (26.09.2013),<br>paragraphs [0123] to [0129]; fig. 4 to 5<br>(Family: none) | 1,8-14 |

Form PCT/ISA/210 (continuation of second sheet) (July 2009)

**REFERENCES CITED IN THE DESCRIPTION**

**Non-patent literature cited in the description**

- Technical Specification Group Radio Access Network; Evolved Universal Terrestrial Radio Access (E-UTRA); Physical Channels and Modulation(Release 11). *3GPPTS 36.211 v11.1.0,* December 2012